# EUROPEAN PATENT SPECIFICATION

(11) **EP 1 315 592 B1**
(45) Date of publication and mention of the grant of the patent: **17.11.2004**
(21) Application number: 01963314.8
(22) Date of filing: 05.09.2001
(51) Int. Cl.: B23K 11/00, B23K 11/08, B21D 22/14, B21D 53/88, F01N 3/28, B21C 37/06

(54) **HOLLOW MEMBER, MANUFACTURING METHOD THEROF, FLUID DISTRIBUTION SYSTEM USING THE HOLLOW MEMBER, AND FORMING APPARATUS OF HOLLOW MEMBER**
HOHLKÖRPER, VERFAHREN ZU DESSEN HERSTELLUNG, FLÜSSIGKEITSVERTEILUNGSSYSTEM UNTER VERWENDUNG DES HOHLKÖRPERS UND VORRICHTUNG ZUM FORMEN DES HOHLKÖRPER
ELEMENT CREUX ET SON PROCEDE DE FABRICATION, UTILISATION DE L'ELEMENT CREUX DANS UN SYSTEME DE DISTRIBUTION DE LIQUIDE ET APPAREIL DE FABRICATION POUR ELEMENT CREUX

(30) Priority: 06.09.2000 JP 2000270255; 15.06.2001 JP 2001182065
(43) Date of publication of application: 04.06.2003
(73) Proprietor: TOYOTA JIDOSHA KABUSHIKI KAISHA, Toyota-shi, Aichi 471-8571 (JP)
(72) Inventor: Onuma, Masashi Toyota Jidosha K. K., Aichi-ken 471-8571 (JP); YOSIMOTO, Kenji, Toyota Jidosha Kabushiki Kaisha, Toyota-shi, Aichi-ken 471-8571 (JP); ISHUZI, Seiji, Toyota Jidosha Kabushiki Kaisha, Toyota-shi, Aichi-ken 471-8571 (JP); ONUMA, Masashi, Toyota Jidosha Kabushiki Kaisha, Toyota-shi, Aichi-ken 471-8571 (JP); OYAMA, Tsuyoshi, Toyota Jidosha Kabushiki Kaisha, Toyota-shi, Aichi-ken 471-8571 (JP)
(74) Representative: Leson, Thomas Johannes Alois, Dipl.-Ing.
(86) International application number: PCT/IB2001/001617
(87) International publication number: WO 2002/020208

(56) References cited:
- EP-A- 0 768 451
- EP-A- 0 869 265
- EP-A- 0 950 460
- DE-A- 19 802 685
- US-A- 4 603 806
- US-A- 5 367 897
- US-A- 5 832 609
- US-A- 6 052 901
- PATENT ABSTRACTS OF JAPAN vol. 006, no. 122 (C-112), 7 July 1982 (1982-07-07) & JP 57 048339 A (TOYOTA MOTOR CORP), 19 March 1982 (1982-03-19)

## Description

### BACKGROUND OF THE INVENTION

### 1. Field of the Invention

The present invention relates to a hollow member, a manufacturing method thereof, a fluid distribution system using the hollow member, and a forming apparatus of a hollow material.

### 2.Description of Related Art

A fluid distribution system for distributing a specific gas and changing its composition in the process of distribution is widely employed in various technical fields. By way of example, in a combustion engine such as an internal-combustion engine, an exhaust pipe for discharging exhaust gas into the atmosphere composes a fluid distribution system for purifying in the exhaust gas.

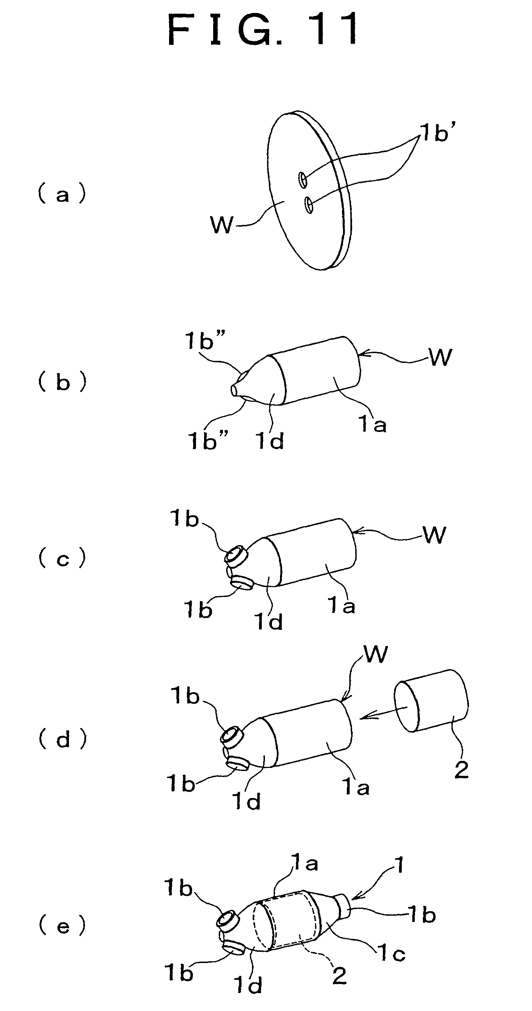

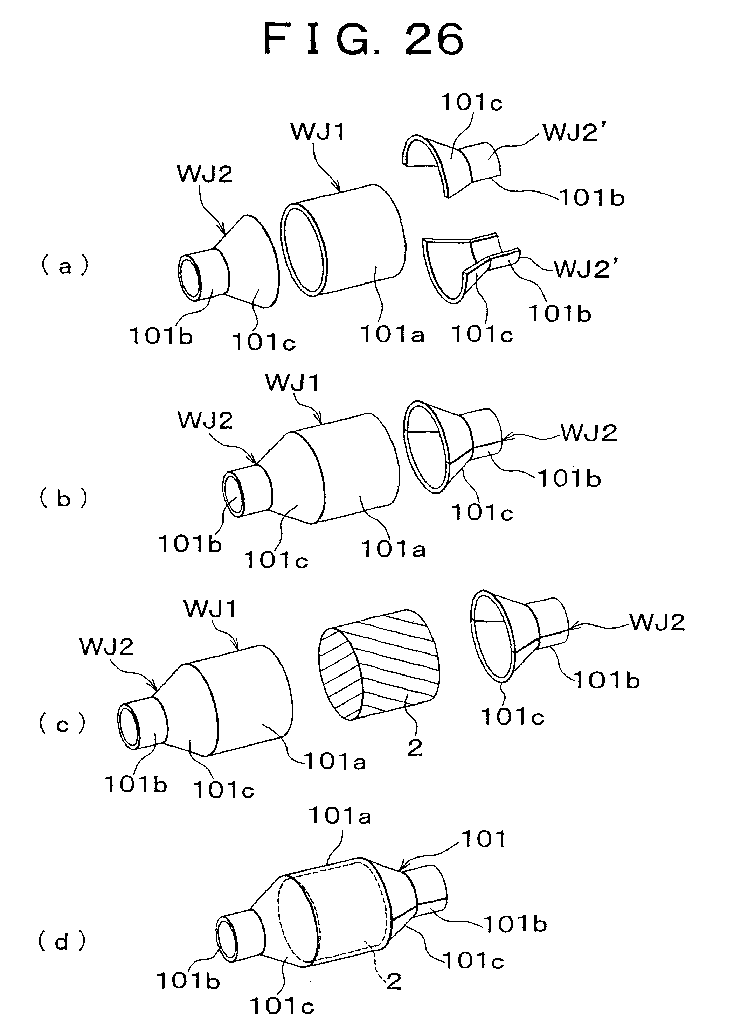

The exhaust pipe is connected to a catalytic converter for removing harmful matter contained in the exhaust gas. The catalytic converter is provided with a catalyst carrier in a catalyst container. As shown in Fig. 26(d), generally, in a catalyst container 101, a catalyst carrier installation portion 101a is formed in its center, and tubular junctions 101b are formed at both ends to be connected to an intake pipe from the internal-combustion engine and a discharge pipe to a portion for the next exhaust gas treatment process, such as a muffler. The installation portion 101a is formed relatively large in diameter, and the junctions 101b are formed relatively small in diameter. The number of junctions 101b installed at one end of the catalyst container 101 may be single or plural depending on the number of pipes to be connected. When installing a single junction 101b at one end of the catalyst container 101 as shown in Fig. 26, in particular, a funnel shaped cone portion 101c whose diameter is gradually changed is formed between the relatively wide installation portion 101a and the relatively narrow junction 101b. When installing a plurality of junctions 101b at one end of the catalyst container 101, there is a branch portion where the plurality of junctions 101b are formed (see a branch portion 1d in Fig. 11(e)). Such a catalytic converter must be formed airtight so that the exhaust gas does not leak outside of the catalyst container 101.

In a conventional art for manufacturing a catalytic converter comprising a catalyst container 101 in a shape having a single junction 101b at both ends and a catalyst carrier 2, as shown in Fig. 26(a), there are prepared a hollow pipe member WJ1 constituting a installation portion 101a, and a member WJ2 constituting a cone portion 101c formed by pressing or the like and a single junction 101b, or a member WJ2' in a shape of the member WJ2 divided in half as required. As shown in Fig. 26(b), in the case of the member WJ2' divided in half constituting the cone portion 101c and the single junction 101b, the member WJ2 is formed by joining the half members WJ2' by welding or the like. Then an opening of the cone portion 101c of one of the joined members WJ2 and one end of the hollow pipe member WJ1 constituting the installation portion 101a are joined butt to butt, and joined together by arc welding or the like. Next, as shown in Fig. 26(c), consequently, a catalyst carrier 2 such as a monolith is inserted and installed in the hollow pipe member WJ1, and finally, as shown in Fig. 26(d), the opening of the cone portion 101c of the other member WJ2 and the other end of the hollow pipe member WJ1 are joined together by welding or the like, so that a catalytic converter having a catalyst 2 installed in the catalyst container 101 is manufactured.

In such a manufacturing method, however, a high degree of control with respect to welding quality is required in order to maintain good airtightness at the butting portion of the members. To solve such problems, a manufacturing method as shown in Fig. 27 was devised and is disclosed by the present applicant in Japanese Patent Application Laid-Open No. 9-112259 and in EP 0 768 451 A.

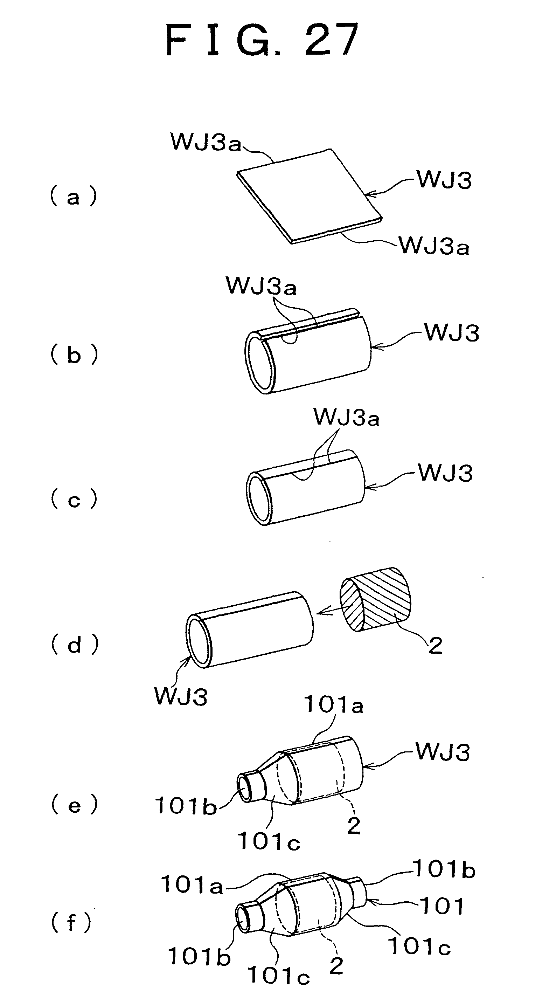

This manufacturing method will be briefly explained. First, as shown in Fig. 27(a), a rectangular flat work WJ3 is prepared, with this rectangular flat work WJ3 bent as shown in Fig. 27(b), and side edges WJ3a joined and coupled together by arc welding or the like to form a hollow material as shown in Fig. 27(c). Here, in order to enhance the roundness of the hollow material shown in Fig. 27(c), an operation of expanding the diameter is performed by a spinning process or the like. Successively, as shown in Fig. 27(d), a catalyst carrier 2 such as a monolith is inserted and installed in the work WJ3 formed in a hollow shape, and one end is contracted by a spinning process or the like as shown in Fig. 27(e), so that a cone portion 101c and a single junction 101b are formed. Finally, as shown in Fig. 27(f), the other end is similarly contracted by a spinning process or the like and the cone portion 101c and single junction 101b are formed, thereby manufacturing a catalytic converter having a catalyst 2 installed in the catalyst container 101. According to this manufacturing method, the butting positions of members are decreased in number, and the reliability of airtightness of the catalyst container 101 is notably enhanced.

Further, for example, in order to form a hollow material for use in a housing of a silencer, as disclosed in Japanese Patent Application Laid-Open No. 11-324637, it is known that a square plate member is bent in a substantially cylindrical shape, and mutually opposing axial sides are overlaid and joined by mush seam welding between roller electrodes.

The hollow member used in a fluid distribution system or the like, in particular, the catalyst container of the catalytic converter for an internal-combustion engine of a vehicle, is required to be reduced in weight for the purpose of improving fuel economy. Also, to suppress generation of radiant noise or the like, it is desirable to form respective components of a hollow member such as the catalyst carrier installation portion 101a, junction 101b, cone portion 101c (see Fig. 27(f)), with the proper plate thickness (wall thickness).

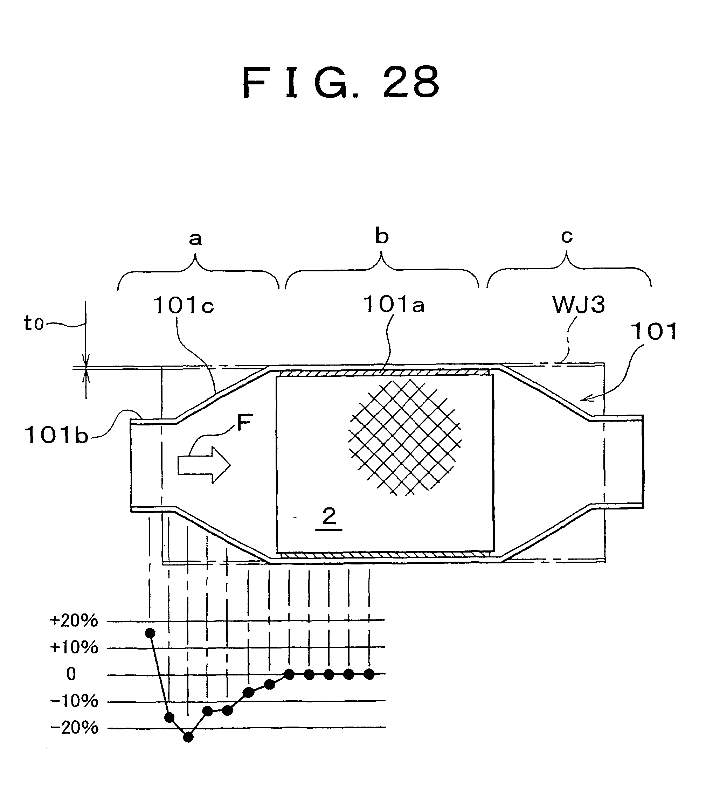

However, the manufacturing method shown in Fig. 27 involves other problems as follows. Fig. 28 shows a sectional view of a catalytic converter by a manufacturing method shown in Fig. 27, and a graph showing changes of plate thickness in the respective parts of the catalyst container 101. In the drawing, the junction 101b and cone portion 101c positioned at both ends of the catalyst container 101 are formed in a part a and a part c, and the central catalyst installation portion 101a is formed in a part b shown in the drawing. Arrow F in the diagram indicates the flow direction of the exhaust gas. The plate thickness changes shown in the graph of Fig. 28 are expressed as an increase or decrease rate of the plate thickness on the basis of the plate thickness before the spinning process.

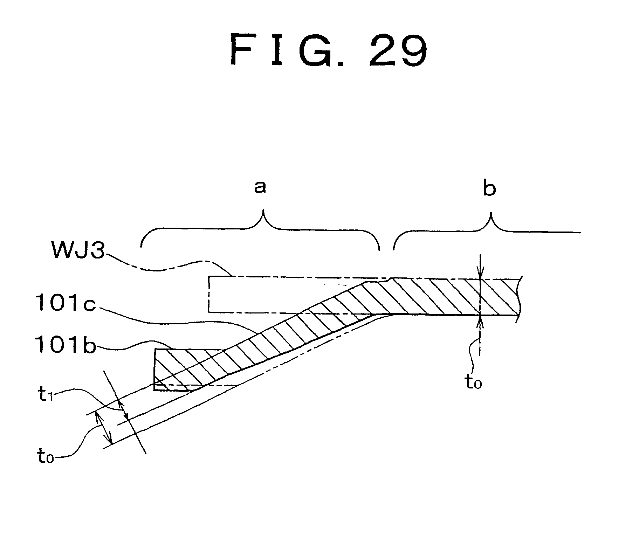

As shown in the graph in Fig. 28, assuming the plate thickness of the hollow material WJ3 before the spinning process to be t0, the plate thickness in the respective parts of the catalyst container 101 is constant at thickness t0 in the part b, but varies about t0±20% in the part a whose shape is largely changed by drawing. Fig. 29 shows an enlarged view of a section of the catalyst container in the part a, and reference symbol t1 denotes the thickness of the minimum thickness portion. Thus, in the portion where the actual plate thickness is less than the ideal value t0, the capability of suppressing radiant noise due to exhaust resistance is decreased.

One conceivable method for solving such problems is to increase the plate thickness of the hollow material WJ3 before the spinning process in consideration of loss of thickness so that the plate thickness may be t0 after thickness loss. With such measure, however, the plate thickness of the entire catalyst container is increased more than necessary and the weight of the catalyst container is increased.

Such problems similarly occur when spinning the hollow material formed as disclosed in Japanese Patent Application Laid-Open No. 11-324637. Further, when manufacturing a catalytic converter by using a hollow material formed as disclosed in Japanese Patent Application Laid-Open No. 11-324637, the catalyst carrier is inserted and installed in the hollow member as the catalyst container. In the inside of the hollow member, a mat is generally wound around. However, when the roundness is disturbed due to a step or the like formed in the peripheral direction of the junction of the hollow member, the fluid of exhaust gas or the like which needs to be treated may leak through the step without passing through the catalyst carrier. Further, there is a problem that the appearance of the product is poor when such a step is formed outside of the hollow member.

On the other hand, in the case of forming a hollow material by joining material plates to form a plate member and bending the plate member and joining the opposing sides, a mush seam welding machine for joining plate members, and another mush seam welding machine for joining the opposing sides of the bent plate member are provided individually, and there is a problem that the equipment for forming such a hollow material becomes large, and the manufacturing cost cannot be reduced.

### SUMMARY OF THE INVENTION

In light of the foregoing problems, it is an object of the invention to facilitate control of plate thickness and control of shape when manufacturing a container of a catalytic converter in the form of a hollow member used in an exhaust pipe of a combustion engine. It is a further object to provide an apparatus for stably supplying a catalyst container having good airtightness, and a fluid distribution system using such a hollow member, and also forming the hollow material easily (the relation between a hollow member and hollow material will be described in detail in "Description of the Preferred Embodiment"), by decreasing adverse effects of a hollow member due to insufficient control of plate thickness and a fluid distribution system using such a hollow member. In a catalyst container, radiant noise increases due to exhaust resistance in the case of a decrease of plate thickness, or the weight of catalyst container increases in the case of an increase of plate thickness.

To solve the problems described above, the catalyst container in the form of a hollow member of the invention is characterized by changing the sectional shape by a spinning process in the hollow material formed of a plate member that is partially different in plate thickness or material.

The plate member that is partially different in plate thickness or material is formed by joining a plurality of plates that are different in plate thickness or material by mush seam welding, and the hollow material is formed by bending the plate member and joining it in the axial direction by mush seam welding.

Mush seam welding is a type of resistance welding, and a method in which two material plates such as steel plates are overlaid slightly at the edges at a specific width and the overlapped portions are pressed and energized from upper and lower portions by circular revolving electrodes, and the work is relatively moved to weld continuously. A high welding strength and sealing effect can be obtained, and as a result of the press of the overlapped portions, the thickness of the overlapped portions can be smaller than the sum of the plate thicknesses of two material plates such as steel plates before welding. Therefore, by joining individual plates different in thickness or material by mush seam welding, a plate member with flat junctions and high welding strength can be obtained. Further, such mush seam welding may be also applied in the joining of mutually opposing axial side ends of plate materials when forming a hollow member with a bending plate member so that a hollow material of flat junctions may be formed without sacrificing welding strength or the like at the junctions.

Using such a hollow member, in order that the characteristics of each part of the hollow material may be most suited to a spinning process when changing the sectional shape by a spinning process, the hollow material is integrally formed of plate materials that are partially different in plate thickness or material. When made of a plate member that is partially different in plate thickness, the rigidity at each part of the hollow material is controlled by changing the plate thickness at each part. Further, when made of a plate member that is partially different in material, the rigidity and durability at each part of the hollow material is controlled by partially changing the material. In any case, the shape and properties of each part of the hollow material obtained by the spinning process are optimized. Further, when plate members differing in plate thickness and material are combined, the advantages of both members can be obtained.

According to a further aspect of the invention, the plate thickness of material plates used in the central portions of the hollow member is set smaller than the plate thickness of the material plates used at end portions of the hollow member.

By using such a hollow member, the entire hollow member can be finished to a substantially uniform thickness by contracting the end portions of hollow material in diameter by the spinning process, because the plate thickness of the end portions of the hollow member can be set nearly equal to the plate thickness of the central portion of the hollow member when the end portions are drawn and the plate thickness is thinner than that before the process.

According to a further aspect of the invention, the plate thickness of material plates used in part of the end portions of the hollow member is set larger than the plate thickness of the material plates used at central portion of the hollow member and in other parts of the end portions.

In accordance with such a hollow member, the entire hollow member can be finished to a substantially uniform plate thickness by contracting the end portions of hollow material in diameter by a spinning process, because when the plate thickness of material plates used in part of the end portions of the hollow member is larger than the thickness of other parts of the end portions, and is also larger than the plate thickness of the central portion, the deformation amount is larger by eccentricity in the direction of other parts of the end portions smaller in plate thickness, so that the plate thickness is reduced.

According to a further aspect of the invention, the hollow member is characterized in that the junctions joined by mush seam welding are chamfered.

Since the junctions are chamfered, when the junctions are overlaid and welded continuously while being pressed between the electrodes, the junctions of material plates of different thickness or material are formed smoothly, and the junctions of the mutually opposing axial sides of plate members are formed more flatly.

According to a further aspect of the invention, the sectional shape of the hollow member is characterized by being changed so as to form a drawing shape suited for the positioning of an insert inserted in the hollow material.

By the structure of the sectional shape of the hollow member being changed so as to form a drawing shape suited for the positioning of an insert inserted in the hollow material, the hollow member is tightly closed with the insert inserted inside, and the insert is held appropriately.

The aforementioned object may further be achieved, for example, by a manufacturing method of the catalyst container in the form of a hollow member. The manufacturing method is characterized by forming plate members that are partially different in plate thickness or material, bending the plate members to form a hollow material, and changing the sectional shape of the hollow material by a spinning process.

In this invention, by forming plate members that are partially different in plate thickness or material, the characteristics of each part of the hollow material can be most suited to a spinning process by which the sectional shape of the hollow member integrated by bending and forming the plate members shown below is changed. When made of a plate member that is partially different in plate thickness, the rigidity at each part of the hollow material is controlled by changing the plate thickness at each part. When made of plate members that are partially different in material, the rigidity and durability at each part of the hollow material is controlled by partially changing the material. In any case, the shape and properties of each part of the hollow material obtained by the spinning process is optimized. Further, when plate members differing in plate thickness and material are combined, the advantages of both materials can be obtained.

The manufacturing method of the hollow member is characterized in that plate members that are partially different in plate thickness or material are formed by joining a plurality of plates that are different in plate thickness or material by mush seam welding, and the hollow material is formed by bending the plate members and joining the opposing sides by mush seam welding.

As mentioned above, by mush seam welding, a high welding strength and sealing effect can be obtained, and as a result of the press of the overlapped portions, the thickness of the overlapped portions can be smaller than the sum of plate thicknesses of two material plates such as steel plates before welding. Therefore, by joining plates different in thickness or material by mush seam welding, plate members of flat and smooth junctions and high welding strength can be obtained. Such mush seam welding may be also applied in the joining of mutually opposing axial side ends of a plate material when a hollow material is formed by bending plate members, so that a hollow material of flat and smooth junctions may be formed without sacrificing welding strength or the like at the junctions.

According to a further aspect of the invention, the manufacturing method of the hollow member is characterized in that the junctions joined by mush seam welding are chamfered beforehand.

Since the junctions are chamfered beforehand, when the junctions are overlaid and welded continuously while being pressed between the electrodes, the junctions of plates of different thickness or material are formed smoothly, and the junctions of the mutually opposing axial sides of plate members are formed more flatly.

According to a further aspect of the invention, the manufacturing method of the hollow member is characterized in that, by drawing the hollow material by a spinning process, the sectional shape thereof is changed so as to be in a shape suited for positioning an insert inserted in the hollow material.

The hollow member obtained by this manufacturing method is tightly closed with the insert inserted inside, and holds the inserts appropriately.

The forming apparatus of the catalyst container in the form of a hollow material according to the invention is an apparatus for manufacturing a hollow material by disposing material plates of different plate thickness or material between electrodes, mutually joining the material plates by mush seam welding to form plate members that are partially different in plate thickness or material, bending the plate member, disposing mutually opposing axial sides of the plate member between electrodes, and joining the mutually opposing axial sides of the plate member by mush seam welding, which is characterized by comprising: flat plate member holding means for holding a plurality of material plates that are different in plate thickness or material so as to join the materials plates by mush seam welding; bend forming means for bending the joined plate members; bent plate member holding means for holding the mutually opposing axial sides of bent plate members so as to join the bent plate member by mush seam welding; a first electrode for mush seam welding disposed in the flat plate member holding means; a second electrode for mush seam welding disposed in the bent plate member holding means; a common third electrode for mush seam welding in collaboration with both first and second electrodes; and mush seam welding direction moving means for moving the flat plate member holding means and bent plate member holding means holding the plate member relatively close to and away from the third electrode in the mush seam welding direction.

According to such a forming apparatus of a hollow material, a plurality of material plates that are different in plate thickness or material are held by overlaying the junction sides by the flat plate member holding means, and are relatively moved in the mush seam welding direction with respect to the third electrode by the mush seam welding direction moving means. The mutually overlaid junction sides of the plate materials are continuously welded and joined while being squeezed between the first electrode and third electrode for mush seam welding provided in the flat plate member holding means, and plate members that are partially different in plate thickness or material are formed. The joined plate members are bent by the bend forming means, and held by overlaying the mutually opposing axial sides by the bent plate member holding means, and move relatively in the mush seam welding direction with respect to the third electrode by the mush seam welding direction moving means. The mutually opposing axial junction sides of the bent plate members are continuously welded and joined, being squeezed between the second electrode and third electrode for mush seam welding provided in the mush seam welding direction moving means so that the hollow material of high joining strength partially different in plate thickness or material is formed integrally. Since the other electrode (third electrode) of a pair of electrodes for mush seam welding is commonly used in the joining of material plates and in the joining of axial sides of bent plate members, and the forming apparatus of a hollow material is reduced in size.

According to a further aspect of the invention, the forming apparatus of the hollow material is characterized in that the bend forming means comprises a roll positioned inside of the plate member to be bent, and extended in the axial direction of the hollow material, with one end supported rotatably, and the second electrode for mush seam welding provided in the bent plate member holding means is formed in the shape of a bar with one end fixed and supported, and further comprises a free end support mechanism for supporting, which is detachably engaged with either free end of the roll of the bend forming means or the bar-shaped second electrode of the bent plate member holding means.

In such a forming apparatus, the roll of the bend forming means and/or the bar-shaped electrode of the bent plate member holding means is supported at both ends because its free end is engaged with the free end support mechanism, and hence the rigidity is higher so that the forming precision is enhanced.

According to a further aspect of the invention, the forming apparatus of the hollow member is characterized by comprising chamfering means for chamfering the junctions to be joined by mush seam welding.

According to such a forming apparatus, the junction side of at least one material plate before holding by the flat plate member holding means, or at least one axial side of the plate members before holding by the bent plate member holding means is chamfered by the chamfering means. Therefore, when joining by mush seam welding, the junction sides are squeezed with the junction area expanded, and junctions of material plates of different plate thickness or material are smoothly formed, and the junctions of mutually opposing axial sides of plate members are joined more firmly in a further flatly formed state.

According to a further aspect of the invention, the forming apparatus of the hollow material according to the invention is characterized in that the bent plate member holding means comprises junction side overlaying means for overlaying the mutually opposing axial sides of the bent plate members so as to join the bent plate member by mush seam welding.

In such forming apparatus, when holding the plate members bent by the bend forming means by using the bent plate member holding means, the mutually opposing axial sides of the plate members that are different in plate thickness are guided by the junction side overlaying means so as to be overlaid at a specific pressure and a predetermined overlaying allowance.

According to a further aspect of the invention, the forming apparatus of a hollow member is characterized by comprising inserting means for inserting an insert inside of the formed hollow member.

In such a forming apparatus, after completion of forming a hollow material by joining the mutually opposing axial junction sides of bent plate members, the hollow member held in the bent plate member holding means is relatively moved to the inserting means by using the mush seam welding direction moving means so that a predetermined insert in accordance with the purpose of use can be inserted inside the hollow member.

Moreover, the fluid distribution system according to the invention for solving the problems described above is a system for distributing fluid inside, which is characterized by comprising a catalyst container in the form of a hollow member formed of a hollow material which is formed of plate members partially different in plate thickness or material and changed in sectional shape by a spinning process.

According to the invention, the hollow member which is a constituent element of the fluid distribution system is formed of plate members partially different in plate thickness or material, so that the characteristics of each part of the hollow material may be most suited to the spinning process by which the sectional shape of the hollow member is changed. When made of plate members of a partially different plate thickness, the rigidity at each part of the hollow material is controlled by changing the plate thickness at each part. When made of plate members partially different in material, the rigidity and durability at each part of the hollow material are controlled by partially changing the material. In any case, the shape and properties of each part of the hollow material obtained by the spinning process is optimized. Further, when plate members differing in plate thickness and material are combined, the advantages of both members can be obtained. By containing such a hollow member, a fluid distribution system optimum in rigidity, durability, shape or properties may be constituted.

According to the invention, the catalysts carrier for treating the fluid supplied to the internal-combustion engine or discharged from the internal-combustion engine can be properly held in the hollow member having a high tightness of closure. When the junctions of the hollow material are joined by mush seam welding, the junctions are flattened, and an increase of distributing resistance of fluid in the hollow member can be prevented.

According to a further aspect of the invention, the fluid distribution system is characterized in that plate members partially different in plate thickness or material are formed by joining a plurality of plates that are different in plate thickness or material by mush seam welding, and the hollow member includes a hollow material formed by bending the plate members and joining the plate member in the axial direction by mush seam welding.

As mentioned above, by mush seam welding, a high welding strength and sealing effect can be obtained, and as a result of the press of the overlapped portions, the thickness of the overlapped portions can be smaller than the sum of the plate thicknesses of two material plates such as steel plates before welding. Therefore, by joining plates of different thickness or material by mush seam welding, plate members of flat junctions and high welding strength can be obtained. Such mush seam welding may be also applied in the joining of mutually opposing axial side ends of plate materials when the hollow member is formed by bending plate members, so that the hollow member of flat junctions may be formed without sacrificing welding strength or the like at the junctions.

According to a further aspect of the invention, the fluid distribution system is characterized in that the junctions joined by mush seam welding include a chamfered hollow member.

In accordance with the constitution, since the junctions of the hollow member constituting the fluid distribution system are chamfered, when the junctions are overlaid and welded continuously while being pressed between the electrodes, the junctions of material plates different in thickness or material are formed smoothly, and the junctions of the mutually opposing axial sides of plate members are formed more flatly.

According to a further aspect of the invention, the fluid distribution system is characterized by comprising a hollow member of which sectional shape is changed to form a drawing shape suited for positioning an insert inserted in the hollow member.

By the constitution in which the sectional shape of the hollow member constituting the fluid distribution system is changed to form a drawing shape suited for positioning an insert inserted in the hollow material, the hollow member has a high tightness of closure with respective to the insert inserted inside, and the insert can be appropriately held.

### BRIEF DESCRIPTION OF THE DRAWINGS

The above and other objects, features, advantages, and technical and industrial significance of this invention will be better understood by reading the following detailed description of exemplary embodiments of the invention, when considered in connection with the accompanying drawings, in which:
Fig. 1 shows a sectional view of a catalytic converter according to an embodiment of the invention, and a graph showing plate thickness changes in respective parts of a catalyst container;
Fig. 2 is an essential sectional view of the catalyst container according to the embodiment of the invention;
Fig. 3 is a process chart showing a manufacturing procedure of the catalytic converter according to the embodiment of the invention;
Fig. 4 is a process chart showing a manufacturing procedure following Fig. 3;
Fig. 5 is a perspective view showing another manufacturing procedure of the catalytic converter according to the embodiment of the invention;
Fig. 6 is a schematic view showing a mush seam welding apparatus used in the embodiment of the invention;
Fig. 7 is a sectional view at a step of inserting a catalyst carrier in a hollow material according to the embodiment of the invention;
Fig. 8 is a process chart showing a procedure of manufacturing a catalytic converter by a spinning process from a circular flat work;
Fig. 9 is a process chart showing another procedure of manufacturing a catalytic converter by a spinning process from a circular flat work;
Fig. 10 is an explanatory diagram showing types of shapes of catalyst containers obtained by the manufacturing procedures shown in Fig. 8 and Fig. 9;
Fig. 11 is a process chart showing still another procedure of manufacturing a catalytic converter by a spinning process from a circular flat work;
Fig. 12 is a front view of an embodiment for explaining the state of forming plate members by joining material plates in a forming apparatus of a hollow material of the invention;
Fig. 13 is a front view of an embodiment for explaining the state of rolling and bending formed plate members in a forming apparatus of a hollow material of the invention;
Fig. 14 is a front view of an embodiment for explaining the state of mush seam welding of side edges by holding rolled and bent plate members in a forming apparatus of a hollow material of the invention;
Fig. 15 is a front view of an embodiment for explaining the state of inserting an insert inside of the formed hollow member in a forming apparatus of a hollow material of the invention;
Fig. 16 is a plan showing an embodiment of flat plate member holding means in a forming apparatus of a hollow material of the invention;
Fig. 17 is a longitudinal side view of Fig. 16;
Fig. 18 is a longitudinal front view of Fig. 16;
Fig. 19 is an explanatory diagram showing a mode of forming plate members by mush seam welding after chamfering junction sides of material plates;
Fig. 20 is an explanatory diagram showing a mode of positioning side edges by rolling and bending the formed plate members by bend forming means;
Fig. 21 is a partially enlarged sectional view showing an embodiment of bent plate member holding means of the invention;
Fig. 22 is a side view of Fig. 21;
Fig. 23 is a partial sectional view for explaining an embodiment of junction side overlaying means of the invention;
Fig. 24 is a cross sectional plan view of clamp members provided with junction side overlaying means, for explaining a mode of pressing of one junction side of plate members;
Fig. 25 is an explanatory diagram showing the center of the press of electrodes to apply pressure to side edges of overlaid plate members, and the portions joined by mush seam welding;
Fig. 26 is an explanatory diagram showing an example of process for manufacturing a catalytic converter having junction and cone portion disposed at both ends in the conventional art;
Fig. 27 is an explanatory diagram showing another example of process for manufacturing a catalytic converter having junction and cone portion disposed at both ends in the conventional art;
Fig. 28 shows a sectional view of a catalytic converter obtained by the method shown in Fig. 27, and a graph showing plate thickness changes in parts of a catalyst container; and
Fig. 29 is an essential sectional view of the catalyst container shown in Fig. 28.

### DESCRIPTION OF THE PREFERRED EMBODIMENTS

In the following description and the accompanying drawings, the present invention will be described in more detail in terms of preferred embodiments.

An embodiment of the invention will be explained below according to the accompanying drawings, in which the fluid distribution system is an exhaust system for purifying the exhaust gas of a combustion engine such as an internal-combustion engine, and the hollow member is a catalyst container 1 of a catalytic converter for holding a catalyst carrier inside. Herein, the same parts as in the conventional art are identified with same reference numerals and detailed description is omitted. In this explanation, a cylindrical member in the process is called a "hollow material", and a changed cylindrical member being drawn in the sectional shape after completion of the spinning process for forming the hollow material into a predetermined shape is called a "hollow member".

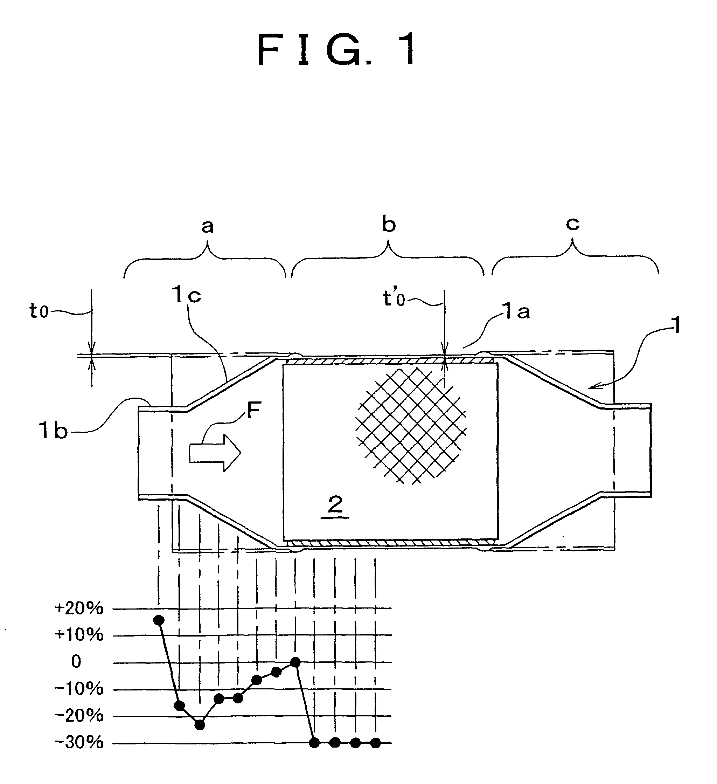

Fig. 1 shows a sectional view of a catalytic converter according to the embodiment of the invention, and a graph showing partial changes in plate thickness of the catalyst container 1. The catalyst container 1 according to the embodiment of the invention schematically has a same structure of a conventional catalyst container 101 shown in Fig. 26(d) and Fig. 27 (f) , and a junction 1b and a cone portion 1c positioned at both ends of the catalyst container 1 are formed in a part a and a part c shown in Fig. 1, and a central catalyst installation portion 1a is formed in a part b. Arrow F in the drawing indicates the flow direction of exhaust gas. The plate thickness changes shown in the graph of Fig. 28 are expressed as an increase or decrease rate of plate thickness on the basis of the plate thickness before the spinning process.

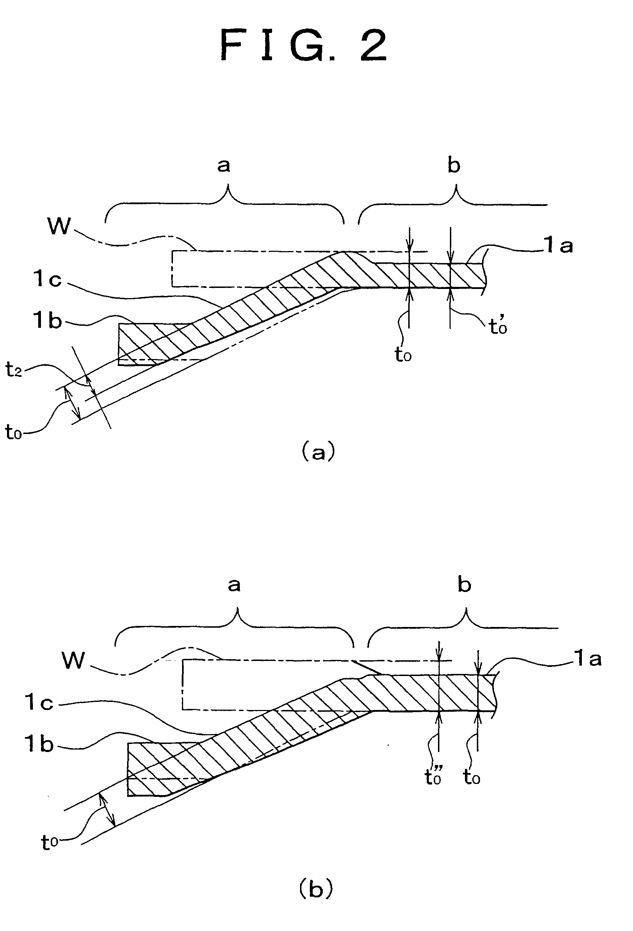

In the embodiment of the invention, considering deformation by a spinning process, a hollow material W is formed from plate materials in which the plate thickness or material is partially changed, the sectional shape of the hollow material W formed from the plate materials is changed by the spinning process, and the catalyst container 1 of a predetermined shape is formed as a hollow member. Specifically, the plate thickness of the parts a and c of the junction 1b and cone portion 1c positioned at both ends of the catalyst container 1 of the hollow material W before the spinning process is t0, just as in the conventional art, but the plate thickness of the part b at the central catalyst installation portion 1a is t0', being about 30% smaller than t0 (see Fig. 2(a)). The forming procedure of the hollow material W in which the plate thickness or material is partially changed will be explained below.

The plate thickness of each part of the hollow material W after a spinning process is unchanged at plate thickness t0' (about 30% less than t0) in the part b at the catalyst installation portion 1a and is constant as shown in the graph in Fig. 1 and in Fig. 2(a). However, in the part a at the junction 1b and cone portion 1c undergoing a significant drawing deformation, the plate thickness is changed by about t0±20%, just as in the conventional art, and the thickness of the minimum thickness part is t2.

Incidentally, the catalyst installation portion 1a of the catalyst container 1 is not required to be processed by a spinning process to deform the part b largely because the hollow material W is formed in a diameter the same as or slightly smaller than that of the catalyst installation portion 1a, and it is hardly necessary to consider plate thickness changes due to the spinning process, and further, since the shape is held by the catalyst carrier 2, there is no effect of lowering strength by reduction of the thickness to t0'. Thus, in the portions free from the effects of lowering strength by reduction of the thickness by a spinning process, by decreasing the thickness beforehand, a reduction of weight of the catalyst container 1 may be promoted.

Further, as shown in Fig. 2(b), the plate thickness of the part b at the catalyst installation portion 1a in the center of the catalyst container 1 of the hollow material W before the spinning process may be set at t0, just as in the conventional art, and the plate thickness of the part a at the junction 1b and cone portion 1c positioned at both ends may be set at t0", about 30% more than t0. In this case, the plate thickness of the parts after a spinning process of the hollow material W remains at t0 in the part b part and is constant, and even in the part a undergoing a significant drawing deformation, the thickness of the minimum thickness part may be kept at t0.

That is, by slightly increasing the thickness only in the portion reduced in wall thickness by a spinning process beforehand, the rigidity of the catalyst container 1 is maintained, and the capability of decreasing the radiant noise due to exhaust resistance can be sufficiently retained. By such an increase in wall thickness, the material rigidity in the spinning process is enhanced, and the forming speed is increased to enhance the efficiency, and the roundness of the catalyst container 1 can be improved at the same time.

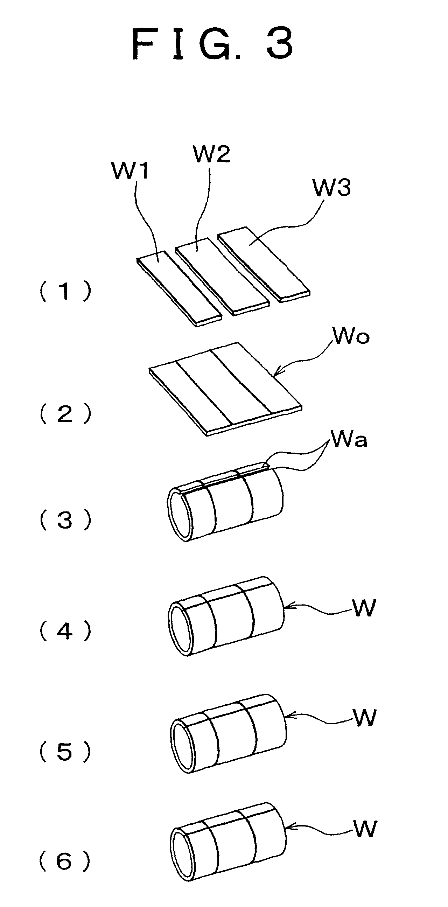

Herein, the forming procedure of the hollow material W in which the plate thickness or material is partially changed, and the procedure of forming the catalyst container 1 in a desired shape by performing a spinning process after inserting the catalyst carrier 2 into the hollow material W are explained while referring to Fig. 3 to Fig. 5.

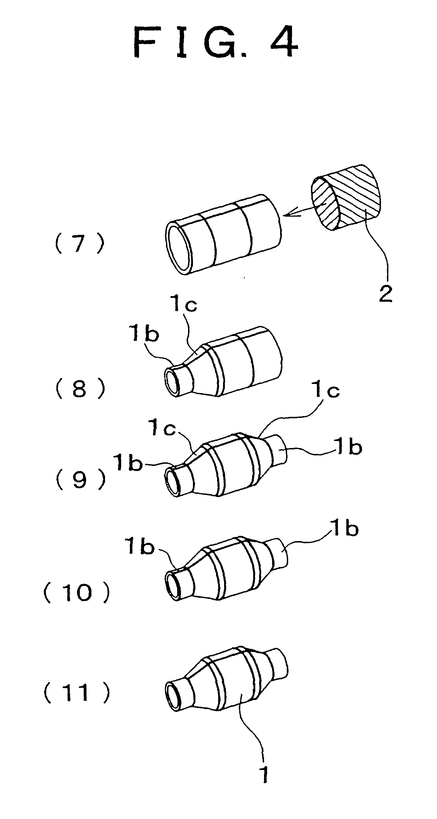

Fig. 3 and Fig. 4 show the procedure of manufacturing a catalytic converter by using a hollow material including the member in a specific range at both ends in the axial direction different from the middle member in the axial direction.

Step (1): As shown in Fig. 3(1), three different material plates W1, W2, and W3 are prepared. The material plates W1, W2, and W3 are selected in plate thickness or material so that the characteristics of the parts may be suited to the subsequent spinning process, and that the heat resistance, corrosion resistance and the like required as the catalyst container may be most appropriate. In the case of Fig. 2(a), for example, the thickness of the material plates W1 and W3 is t0, and the thickness of the material plate W2 is t0' (30% less than t0). In an example of Fig. 2(b), the thickness of the material plates W1 and W3 is t0" (30% more than t0), and the thickness of the material plate W2 is t0.

Step (2): As shown in Fig. 3(2), the material plates W1, W2, and W3 are joined by mush seam welding, and plate member W0 in which the plate thickness or material is partially changed is formed. Mush seam welding is a kind of resistance welding, in which edges of two material plates such as steel plates are overlaid slightly at a specific width (the overlaying allowance is usually about 2 times the plate thickness or less) , and the overlapped portions are pressed and energized from above and beneath by circular revolving electrodes, and the work is moved to weld continuously. As a result, a high welding strength and sealing (closing) effect can be obtained, and further, as a result of the press of overlapped portions, the thickness of the overlapped portions can be reduced smaller than the sum of the plate thicknesses of two material plates such as steel plates before welding. Moreover, as explained below, by chamfering at least one of the subsequently mutually joined edge of material plates W1, W2, and W3, the junction area is increased, and the junction strength is fortified, and the junction after welding may be smooth.

Step (3): The plate member W is rolled and bent, and mutually opposing axial side edges Wa are slightly overlaid at a specific width in the axial direction (see Fig. 3(3)).

Step (4): Mutually overlaid portions are joined in the axial direction by mush seam welding, and a hollow material W can be obtained (see Fig. 3(4)).

Step (5): To enhance the roundness of the hollow material, an operation of expanding the diameter of the hollow material W is performed by a spinning process or the like (see Fig. 3(5)).

Step (6): Leak inspection is performed as required at the respective junctions of mush seam welding (see Fig. 3(6)).

Step (7): A catalyst carrier 2 (an insert) such as a monolith is inserted and installed in the hollow material W (see Fig. 4 (7)).

Step (8): One end is contracted by a spinning process or the like, and a cone portion 1c and a single junction 1b are formed (see Fig. 4 (8)).

Step (9): The other end is similarly contracted by a spinning process or the like, and a cone portion 1c and a single junction 1b are formed. At this point, the catalyst carrier 2 is positioned with both ends in the axial direction (see Fig. 4 (9)).

Step (10): The end of the junction 1b is cut to a predetermined length (see Fig. 4 (10)).

Step (11): Leak inspection is performed as required, and a catalytic converter having the catalyst 2 installed inside the catalyst container 1 can be obtained (see Fig. 4 (11)).

As an applied example of the method shown in Fig. 3 and Fig. 4, Fig. 5 shows a procedure of manufacturing a catalytic converter from the hollow material by forming the hollow material differing in plate thickness in the circumferential in a specific range at both ends in the axial direction direction.

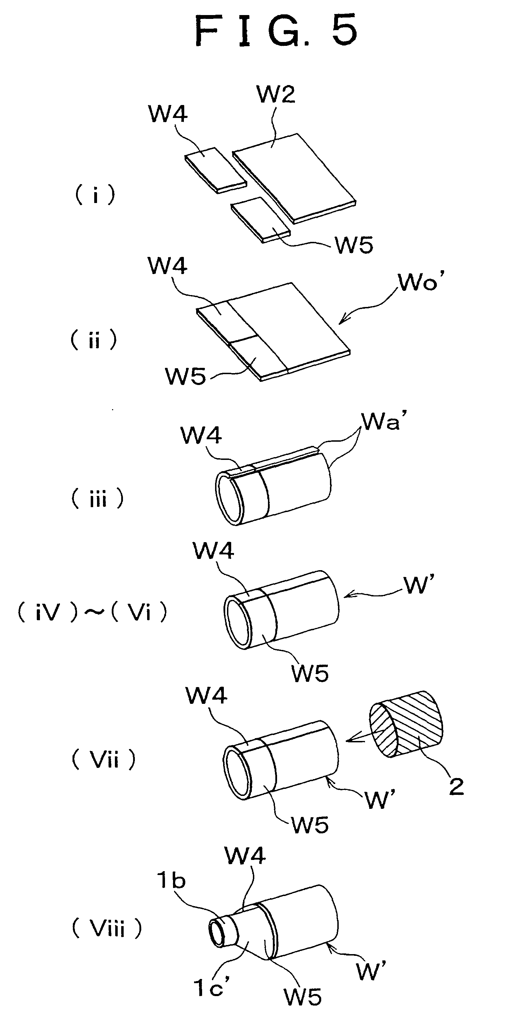

Step (i): Three different material plates W2, W4, and W5 are prepared. Material plates W2 and W4 are the same in thickness, but material plate W5 is thicker than material plates W2 and W4 (see Fig. 5(i)).

Step (ii): The respective material plates W2, W4, and W5 are joined by mush seam welding, and a plate member W0' partially different in plate thickness is formed. In the invention, the mush seam welding for forming the plate member W0' is used for joining not only the peripheral sides of the hollow material W as mentioned above, but also the axial sides (see Fig. 5(ii)).

Step (iii) : The plate member W0' is rolled and bent, and mutually opposing axial side edges Wa' are slightly overlaid in a specified width in the axial direction (see Fig. 5(iii)).

Step (iv): The overlaid portions are joined in the axial direction by mush seam welding, and the hollow material W' can be obtained (see Fig. 5(iv)).

Step (v) : To enhance the roundness of the hollow material, an operation of expanding the diameter of the hollow material W' is performed by a spinning process or the like (see Fig. 5(v)).

Step (vi) : Leak inspection is performed as required in the respective junctions of mush seam welding (see Fig. 5(vi)).

Step (vii): A catalyst carrier 2 (an insert) such as a monolith is inserted and installed in the hollow material W' (see Fig. 5(vii)).

Step (viii) : One end is contracted by a spinning process or the like, and a cone portion 1c' and a single junction 1b' are formed. At this time, since a thin part W4 has a lower rigidity than a thick part W5, as shown in the drawing, the cone portion 1c' is eccentric in the direction of the thin part W4 before the spinning process, and the junction 1b is also formed eccentrically. As a result of the cone portion 1c' being eccentric in the direction of the thin part W4 before the spinning process, the thick part W5 is increased in deformation and is reduced in thickness so as to be close to the thickness of the thin part W4. The subsequent process is same as shown in Fig. 4, and description of detail is omitted (see Fig. 5(viii)).

Thus, by partially changing the plate thickness of the plate member W in the peripheral direction, the shape after a spinning process can be changed as required (eccentric, changed angle, etc.) while the applied force is kept constant in the peripheral direction at the time of the spinning process. That is, in the case of such eccentric, changed angle or the like, since the thickness of the part in the direction of the inside of bending is reduced due to a greater number of times of bending by roller for a spinning process, by increasing the plate thickness of this part at this time, a uniform thickness may be obtained on the whole.

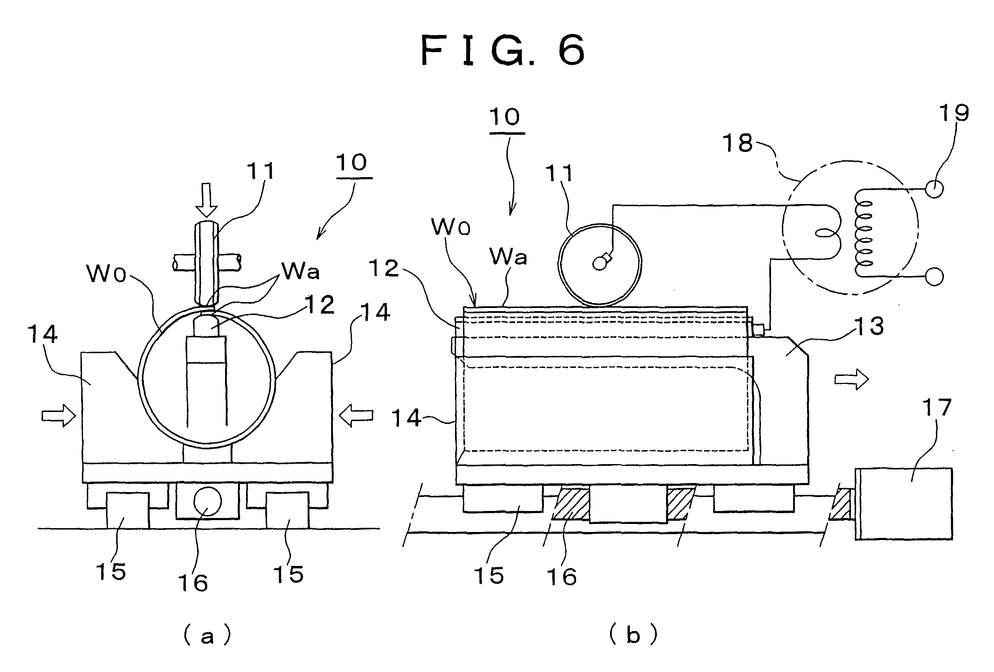

Fig. 6 shows an example of a mush seam welding machine 10 for performing a process of obtaining a hollow material W by joining the mutually opposing axial side edges Wa in the axial direction in step (4) shown in Fig. 3. Specifically, Fig. 6(a) is a front view of the mush seam welding machine 10, and Fig. 6(b) is a side view of the mush seam welding machine 10. An upper electrode 11 of the mush seam welding machine 10 is a rotatable conductive member in the form of a roller. A lower electrode 12 is, by contrast, a conductive member in the form of a plate or bar extending parallel to the tangent direction of the upper electrode 11. The lower electrode 12 is fixed at a predetermined height by a hanger 13 which moves parallel to the tangent direction of the upper electrode 11 by means of a linear guide 15. The interval of the upper electrode 11 and lower electrode 12 can be adjusted depending on the thickness of the hollow material W.

A motor 17 is provided as the operating source for moving the hanger 13 by the linear guide 15, and the driving force of the motor 17 is transmitted to the hanger 13 through a ball screw 16. Further, a work chuck 14 is provided for fixing a rolled and bent plate member W0. Electric power from a power source 19 is supplied to the upper electrode 11 and lower electrode 12 through a transformer 18.

In the case of mush seam welding, first, the lower electrode 12 is moved to a position away from the upper electrode 11, and the rolled and bent plate member W0 is inserted into the lower electrode 12. The plate member W0 is fixed by the work chuck 14 so that the overlaid side edges Wa of the plate member W0 may contact with the upper surface of the lower electrode 12.

In succession, the hanger 13 is moved, and the upper electrode 11 is pushed to contact from one end in the axial direction of the plate member W0. While pressing and energizing the overlaid edges Wa of the plate member W0 between the upper electrode 11 and lower electrode 12, the plate member W0 is moved at a constant speed, thereby welding continuously. In Fig. 3, the welding machine used in the mush seam welding process for forming the plate member W0 in which the plate thickness or material is partially changed by joining the material plates in step (2) has a similar structure, but its work chuck is more suited for fixing flat plates.

The operational effects obtained by the embodiment of the invention having such configuration are as follows. First, in the embodiment of the invention, since the plate member W0 for forming the hollow material W is formed to be partially different in plate thickness or material, the characteristics of the individual parts of the hollow material W, W' may be adjusted to be most suited for the spinning process. Moreover, the thickness and shape of the hollow member obtained by spinning the hollow material (step (8) in Fig. 4, step (viii) in Fig. 5) may be adjusted to be in an optimum state depending on the purpose of use as shown in Fig. 1, Fig. 2 and Fig. 5.

In the examples shown in Fig. 1 and Fig. 2(a), in the portions in which the thickness is not reduced by a spinning process so that there is no effect of lowering strength, the wall thickness is decreased preliminarily, so that weight reduction of the catalyst container 1 is promoted. In the example shown in Fig. 2(b), by increasing the wall thickness preliminarily only in the portion reduced in wall thickness by the spinning process, the rigidity of the catalyst container 1 is sufficiently maintained, and the capability of suppressing radiant noise due to exhaust resistance can be assured sufficiently at the same time. Further, by such an increase of wall thickness, the material rigidity is enhanced at the time of the spinning process, and roundness can be improved, too. Moreover, according to the method shown in Fig. 5, with applied force constant in the circumferential direction during the spinning process, the shape of the hollow member after the spinning process may be changed freely as required (eccentric, varied angle, etc.).

In the embodiment, the plate member W0 partially different in plate thickness or material is mainly explained, but the invention is not limited to this embodiment. In the catalytic converter shown in Fig. 1, for example, in view of that the temperature at the upstream side (part a) is higher than the temperature of exhaust gas passing through the downstream side (part c), such application that the durability of the catalyst container 1 may be enhanced by using a material of higher heat resistance in part a is possible.

As mentioned above, when the plate member W0 for forming the hollow material is made a plate member that is partially different in plate thickness, the rigidity of the plate can be controlled by changing the plate thickness in each part, and the shape obtained by spinning the hollow material can be optimized. Or when the plate member W0 for forming the hollow material W is made a plate member partially different in material, the rigidity and durability can be controlled by varying the material in each part. In any case, the shape obtained by spinning the hollow material may be optimized, and the quality of hollow member completed as a product can be optimized. When a plate member different in both plate thickness and material are combined, the merits of both members can be obtained. Thus, "plate members partially different plate in thickness or material" of the invention includes not only both members different in either plate thickness or material, but also members different in both plate thickness and material.

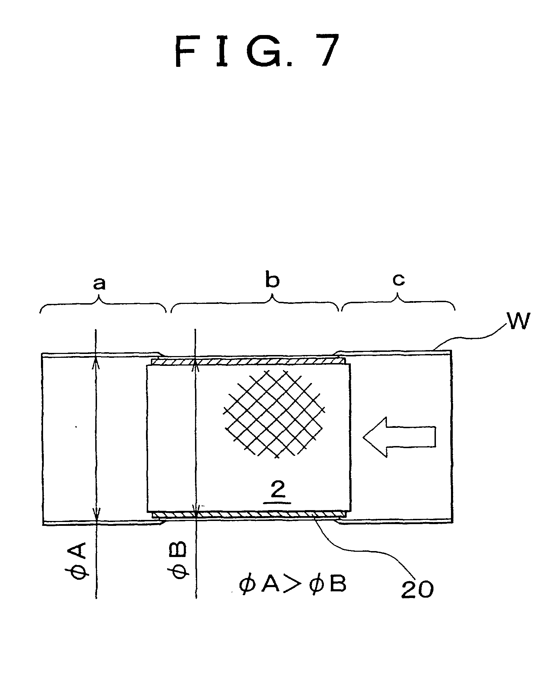

Further, as shown in Fig. 7, when rolling and forming the plate member W0 (step (3) in Fig. 3) , material plates W1, W3 overlaid on a material plate W2 are rolled and formed so as to be at the outside in the radial direction of the material plate W2, so that inside diameter A of the part a and part c may be larger than inside diameter B of the part b by the portion of thickness of the plate W2. As a result, the inserting performance is enhanced when inserting the catalyst carrier 2 into the hollow material W as indicated by arrow. In Fig. 7, reference numeral 20 shows a vibration insulating mat.

In the embodiment of the invention, by joining individual material plates different in plate thickness or material, W1, W2 and W3 (or W2, W4 and W5), mush seam welding is performed when forming a plate member W0 partially different in plate thickness or material (step (1) in Fig. 3, step (i) in Fig. 5). Since, in the mush seam welding, continuous welding is performed by slightly overlaying edges of material plates made of two material plates such as steel plates and moving the work while pressing and energizing the overlapped portions from above and beneath by circular revolving electrodes, even if the plate thickness is not more than 1.0 mm, welding of a high degree of closure is realized and a plate member W0 having smooth or flat junctions and high welding strength is obtained. Further, after rolling and forming the plate member W, mutually opposing axial sides are joined by mush seam welding in the axial direction, and the hollow material W is formed (step (4) in Fig. 3, step (iv) in Fig. 5) so that a hollow material W having flat junctions is formed without sacrificing welding strength or the like in the junctions in the axial direction.

Moreover, since any junctions are joined by mush seam welding, when the catalyst container 1 is formed, no protrusion increasing the resistance of exhaust is formed inside the duct. Therefore, in spite of the technique of manufacturing the catalyst container by welding a plurality of material plates, the degree of closure is high, the exhaust resistance is low, and an appropriate strength is obtained at the proper parts.

By forming the cone 1c and a single junction 1b by contracting the diameter of the hollow material W by a spinning process (step (8) in Fig. 4, step (viii) in Fig. 5, and (9) in Fig. 4), the sectional shape of the catalyst container 1 is a drawing shape suited for positioning of the catalyst carrier 2. Hence, the catalyst container 1 has a high degree of closure and can appropriately hold the catalyst carrier 2 being inserted and used inside.

Owing to these reasons, the exhaust system of the internal-combustion engine having the catalytic converter according to the embodiment of the invention is characterized by light weight, high airtightness, high durability, low noise, and low exhaust resistance, and is hence extremely suitable as an exhaust treatment system of high efficiency loaded in a mobile body such as automobile, for example. When the intake system of the internal-combustion engine is composed by using a hollow member having a similar structure formed by the same procedure as in the embodiment of the invention, in the intake system, the same operational effect as when applied to the exhaust system can be obtained. That is, according to the embodiment of the invention, in the fluid distribution system of an internal-combustion engine including the intake system and exhaust system, the same operational effect can be obtained. In the embodiment of the invention, the diameter of the hollow material W is contracted by a spinning process, but depending on the shape of the required hollow member, the diameter can be expanded by the spinning process.

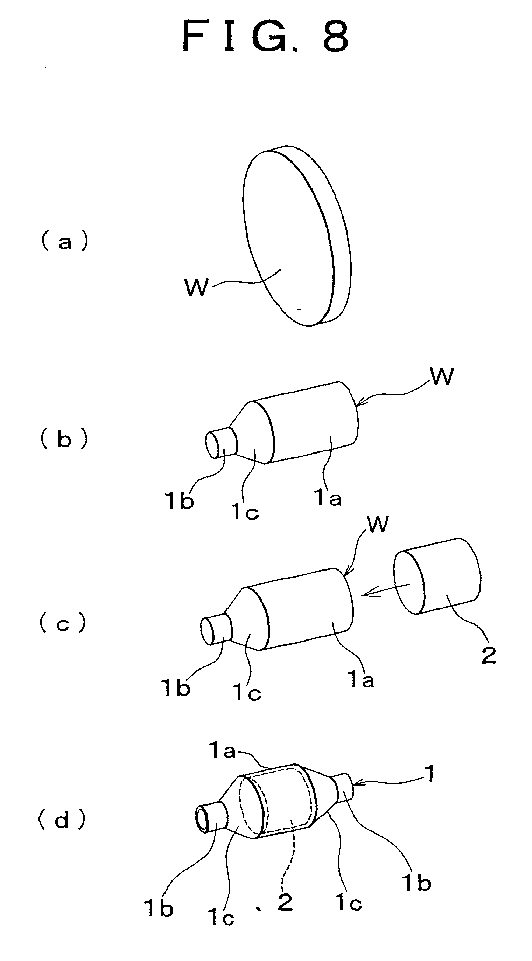

The catalytic converter and manufacturing method thereof according to the embodiment of the invention may be also applied to the catalytic converter and manufacturing method thereof disclosed by the present inventors in Japanese Patent Application No. 2000-101111. The manufacturing method of the catalytic converter is briefly explained below while referring to Fig. 8 to Fig. 11.

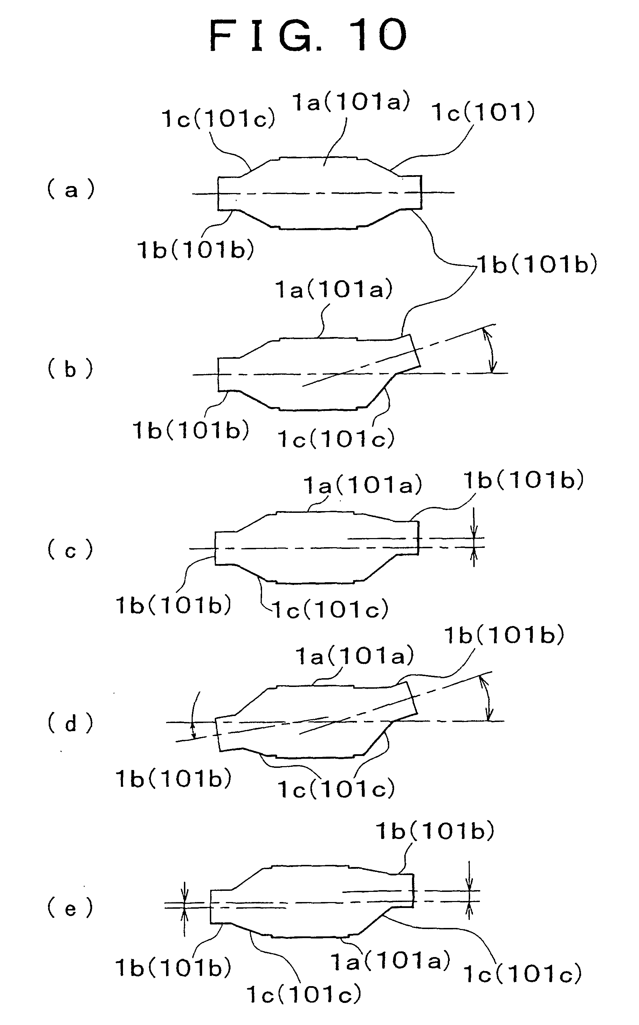

In the method shown in Fig. 8, a flat work W is formed into a circular form (a) , and the flat work W is subjected to a spinning process in a plane direction to form integrally a junction 1b, a cone 1c, and a catalyst installation portion 1a sequentially from one end (b). At this time, the end face of the junction 1b formed at one end is composed of a central portion of the circular flat work W before the spinning process, and its end face is in a closed state, and the other end is composed of a peripheral edge of the circular flat work W before the spinning process, and in this stage it is in an opened state without forming the cone 1c and the junction 1b. The catalyst installation portion 1a of the catalyst container 1 is composed of an annular portion between the central portion and peripheral edge of the circular flat work W before the spinning process. The amount of deformation of the circular flat work W before the spinning process increases from the central portion to the peripheral edge. Accordingly, considering the difference in the deformation amount depending on the parts of the work W and the final plate thickness of the components 1a, 1b, 1c of the catalyst container 1, the plate thickness is set differently in parts in the radial direction of the circular flat work W. When forming the respective components 1a, 1b, 1c of the catalyst container 1 of different material, the material of the circular flat work W are changed depending on the parts in the radial direction corresponding to these components. At the other end in this opened state without contracting in diameter, when forming the junction 1b later, as shown in the junction 1b at the right end in Fig. 10(b), its axial line is inclined (bias angle) at a predetermined angle to the axial line of the catalyst installation portion 1a, or, as shown in the junction 1b at the right end in Fig. 10(c), its axial line may be eccentric from the axial line of the catalyst installation portion 1a. Consequently, as shown in Fig. 8(c), from the other end in the opened state, a catalyst carrier 2 such as a monolith is inserted into the catalyst installation portion 1a, and by spinning so as to contract the diameter at the other end, the catalyst 2 is accommodated and placed in the catalyst installation portion 1a, and the cone 1c and junction 1b are integrally formed consecutively from the catalyst installation portion 1a (d). The junction 1b in the closed state at one end formed previously is opened by piercing a hole in the end, or cutting the junction 1b at a predetermined position in the longitudinal direction. Thus, the catalyst container 1 of the catalytic converter is formed integrally.

By forming the circular work W shown in Fig. 8(a) as a plate member that is partially different in plate thickness or material as mentioned above, the same operational effect as in the embodiment can be obtained. For example, by increasing the plate thickness in the central portion and peripheral edge of the circular shape in consideration of the difference in deformation amount depending on the parts of the work W, the same operational effect as in the embodiment of the invention shown in Fig. 1 and Fig. 2 can be obtained.

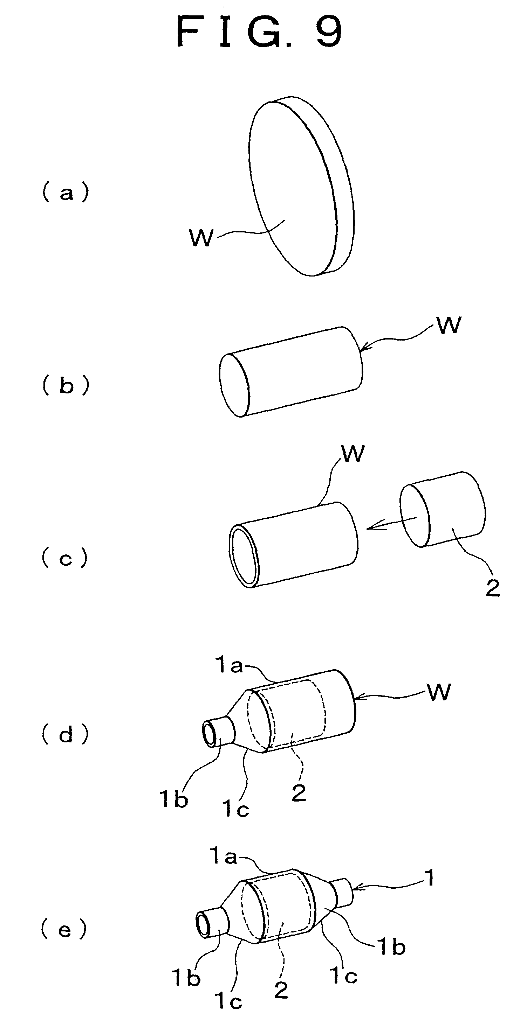

The method shown in Fig. 9 is characterized by forming a flat work W partially different in plate thickness or material in a circular shape in consideration of the difference in deformation amount depending on the parts of the work W and the plate thickness of the components 1a, 1b, 1c of the catalyst container 1 to be formed finally, or the material of each component (a) , spinning the flat work W in the plane direction to form a bottomed cylindrical body having one side closed which is nearly the same in diameter as the catalyst installation portion 1a over the entire length (b), opening the closed end by cutting, and inserting a catalyst 2 such as a monolith inside (c), spinning either end first to contract in diameter to form a cone 1c and a junction 1b integrally consecutively from the catalyst installation portion 1a (d) , and spinning the other end to contract in diameter to accommodate and install the catalyst 2 in the catalyst installation portion 1a, and to form the cone 1c and junction 1b integrally in a predetermined thickness consecutively from the catalyst installation portion 1a (e). In this case, since both ends of the cylindrically formed work W are formed nearly the same diameter as the catalyst installation portion 1a, as shown in the junction 1b at both ends in Fig. 10(d), the axial line is inclined at a specified angle to the axial line of the catalyst installation portion 1a, or, as shown in the junction 1b at both ends in Fig. 10(e), the axial line may be eccentric from the axial line of the catalyst installation portion 1a.

By forming the cylindrical work W shown in Fig. 9(a) as a plate member that is partially different in plate thickness or material as mentioned above, the same operational effect as in the embodiment of the invention can be obtained.

The method shown in Fig. 11 is to form a branch portion 1d provided with a plurality of junctions 1b, in which holes 1b' of a predetermined shape are formed to be junctions 1b later in the center, together with a flat work W partially different in plate thickness or material in a circular shape in consideration of the difference in the deformation amount depending on the parts of the work W and the plate thickness of the components 1a, 1b, 1c of the catalyst container 1 to be formed finally, or the material of each portion (a), and the flat work W is subjected to a spinning process in the plane direction to form a branch portion 1d having the plurality of holes 1b' at one end, and a catalyst installation portion 1a integrally consecutively to the branch portion 1d (b). By the spinning process, the holes 1b' of the branch portion 1d formed at one end are modified into circular openings 1b" as the material flow is formed in the work W. The other end is composed of a peripheral edge of the circular flat work W before the spinning process, and is opened without forming the cone 1c and the junction 1b. Consequently, by burring the openings 1b" of the branch portion 1d or the like, a tubular junction 1b is formed (c), and from the other end in open state, a catalyst 2 such as a monolith is inserted into the catalyst installation portion 1a (d), and by spinning to contract diameter of the other end, the catalyst is accommodated and installed in the catalyst installation portion 1a, and the cone 1c and junction 1b are integrally formed consecutively from the installation portion (e). In the catalytic converter thus forming the catalyst container 1, the branch portion 1d having a plurality of tubular junctions 1b, cone 1c, and single junction 1b are formed integrally, stably, and precisely at both ends of the catalyst installation portion 1a, and the entire structure is free from welded or other joined part unlike the conventional art, and it is not necessary to test for air leakage. In this case, too, not only the cone 1c and junction 1b, but also the branch portion 1d can be formed at a bias and/or eccentric angle as shown in Fig. 10, just as in the case of forming the single junction 1b.

Further, by forming the circular work W shown in Fig. 11(a) as a plate member that is partially different in plate thickness or material as mentioned above, the same operational effect as in the embodiment of the invention can be obtained.

As described herein, the embodiment of the invention is suited to control plate thickness or control shape at a high precision in the case of manufacture of a hollow member having a necessary sectional shape by a spinning process.

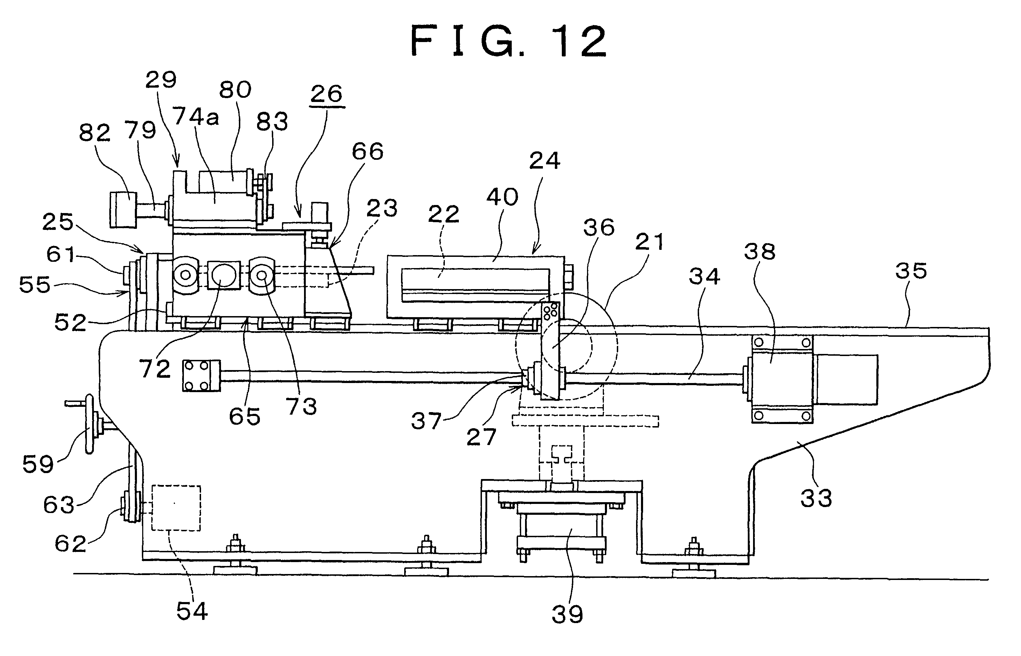

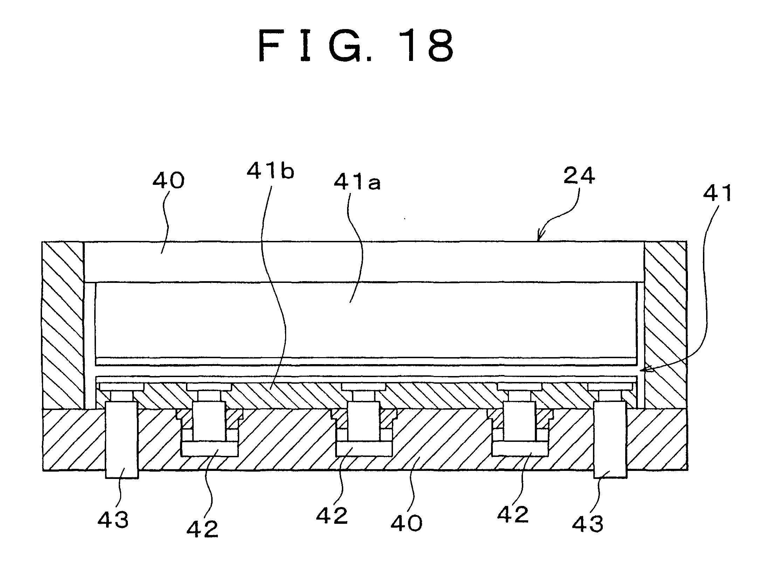

An embodiment of the apparatus of the invention for forming a hollow material used in a hollow member or the like constituting the catalyst container 1 is specifically described below while referring to Fig. 12 to Fig. 25.

As shown in Fig. 12 to Fig. 15, the forming apparatus of a hollow material of the invention is an apparatus for forming a hollow material W by disposing individual material plates W1, W2, W3 or the like different in plate thickness or material between electrodes 21 and 22, joining mutually by mush seam welding to a form plate member W0 partially different in plate thickness or material, bending the plate member W0, disposing mutually opposing axial sides Wa between electrodes 21 and 23, and joining by mush seam welding, which comprises flat plate holding means 24 for holding individual material plates W1, W2, W3 or the like different in plate thickness or material so as to be joined by mush seam welding, bend forming means 25 for rolling and bending the joined plate member W0, bent plate holding means 26 for holding the mutually opposing axial sides Wa of the bent plate member W0 so as to join by mush seam welding, one electrode 22 for mush seam welding disposed in the flat plate holding means 24, one electrode 23 for mush seam welding disposed in the bent plate holding means 26, another common electrode 21 for mush seam welding in collaboration with the both electrodes 22 and 23, and mush seam welding direction moving means 27 for moving the flat plate holding means 24 and bent plate holding means 26 holding the plate member W0 relatively close to and away from the other electrode 21 in the mush seam welding direction.

Further, in the forming apparatus of a hollow material of the invention, the bend forming means 25 includes a roll 28 positioned inside of the plate member W0 to be bent, extending in the axial direction of the hollow material W, and rotatably supported at one end, and also a free end support mechanism 29 for supporting, in which one electrode 23 for mush seam welding disposed in the bent plate holding means 26 is formed in the shape of a bar having one end fixed and supported, which is detachably engaged with at least one free end of the roll 28 of the bend forming means 25 and the bar-shaped electrode 23 of the bent plate holding means 26.

The forming apparatus of a hollow material of the invention further comprises chamfering means 30 for chamfering side edges Wa to be formed as junctions to join by mush seam welding, in which the bent plate holding means 26 includes junction side overlaying means 31 for overlaying mutually opposing axial sides (edges) Wa, Wa of the bent plate member W0 so as to join by mush seam welding, and inserting means 32 for inserting an insert such as catalyst carrier 2 inside of the formed hollow material W.

In the forming apparatus of a hollow material of the invention, a pair of guide rails 35, 35 are provided parallel on a base 33. At least at one side of the base 33, a ball screw shaft 34 is disposed as mush seam welding direction moving means 27 so as to extend parallel to the guide rail 35, and a ball screw nut 37 provided in a bracket 36 is engaged with the ball screw shaft 34, and a motor 38 is connected so as to control and rotate about the ball screw shaft 34. The bracket 36 is detachably connected as required either to the flat plate holding means 24 and bent plate holding means 26. Inside the base 33, the other electrode 21 for mush seam welding is elevatably supported by driving a cylinder 39. The electrode 21 is formed like a roller or disk, and is supported so that its side may be parallel to the guide rail 35, that is, the rotation central axis 21C may be nearly orthogonal to the guide rail 35.

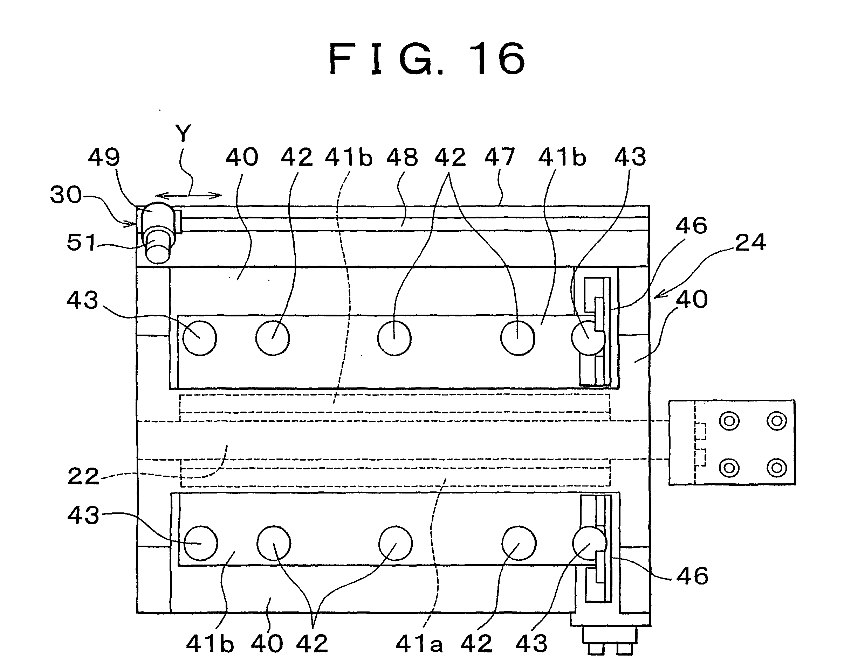

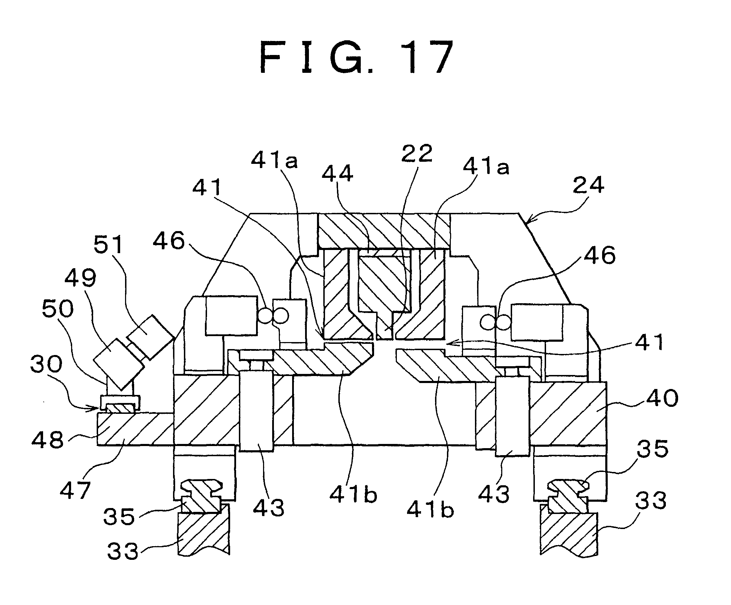

The flat plate holding means 24 comprises, as shown in Fig. 16 to Fig. 18, a frame 40 placed slidably on the guide rail 35 on the base 33, clamps 41 for holding material plates W1 and W2, or W2 and W3, a cylinder 42 for driving to open or close the clamps 41, a guide pin 43 for guiding the opening and closing action of the clamps 41, and an electrode 22 for mush seam welding. This electrode 22 for mush seam welding is formed in the shape of a bar nearly flat on the surface contacting with the material plates W1, W2, W3 and the like, and the frame 40 is mounted through an insulating plate 44 so as to be disposed parallel to the guide rail between the both clamps 41. Each clamp 41 is composed of a fixing member 40a fixed to the frame 40, and a movable member 40b opened and closed by the fixing member 40a by driving of the cylinder 42 provided in the frame 40. The holding surface of the fixing member 41a of one clamp 41 (the left side in the embodiment shown in Fig. 17) is set to be positioned nearly at substantially the same height as the leading end of the bar-shaped electrode 22. The holding surface of the fixing member 41a of other clamp 41 (the right side in the embodiment shown in Fig. 17) is set so as to be lower by the portion of the plate thickness of the material plate W1 or W3 held by one clamp 41. To detect if the material plates W1, W2, W3 are held securely by the clamps 41 or not, a sensor 46 is provided for detecting movement of the movable member 41b.

In this embodiment, moreover, a support member 47 is disposed at one side edge of the frame 40, and a guide rail 48 is disposed on the top so as to be parallel to the side edges of the material plates W1, W2, W3 and the like held by the clamp 41. On the guide rail 48, a slider 50 is slidably mounted so as to be moved parallel (see arrow Y in Fig. 16) to the side edges as junction sides of the material plates W1, W2, W3 manually or by an actuator such as motor 49, and a cutter 51 is disposed on the slider 50 at an inclination of a specified angle for chamfering the side edges of material plates.

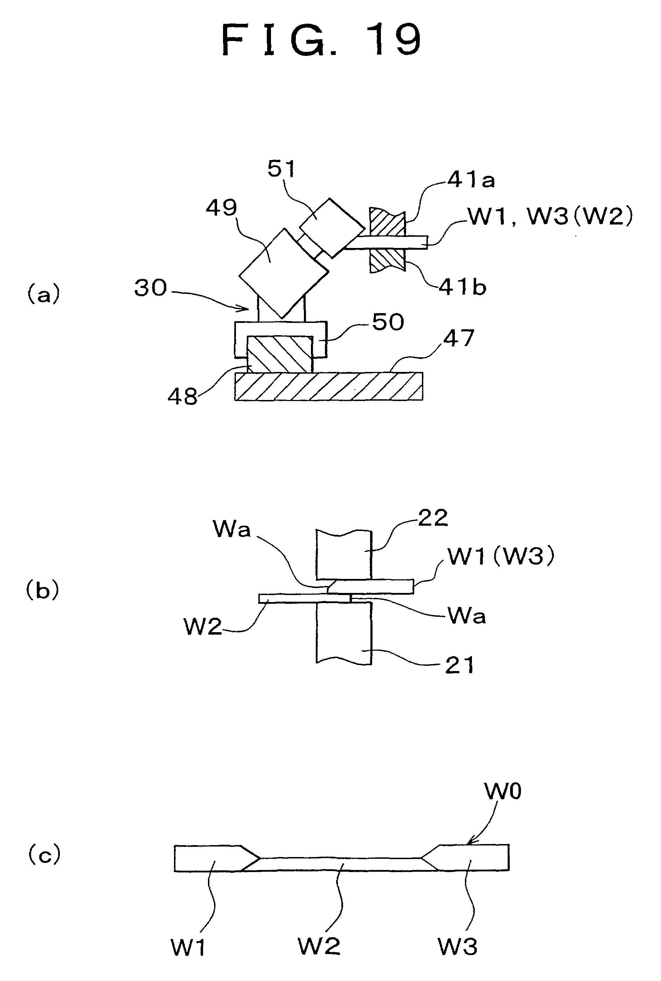

In the thus composed flat plate holding means 24, first as shown in Fig. 19(a), at least one side edge to be chamfered of the material plates W1, W2, W3 to be joined is held opposite the cutter 51 and moved along the guide rail 48 while driving the cutter 51 by the motor 49, and the side edges of the material plates W1, W2, W3 are chamfered. By the reason explained below, it is preferred to chamfer the thicker material plates (W1, W3) out of the material plates W1, W2, W3 to be joined by mush seam welding. The chamfering range can be set as required, but generally about 50% of the plate thickness can be chamfered in the plate thickness direction and width direction of the material plates W1, W2, W3. To correspond to the width of the material plates W1, W2, W3 to be chamfered, the material plates W1, W2, W3 may be held between the movable member 41b of the clamp 41 and the frame 40, or, although not shown in the drawing, it may be also designed to adjust and move the position of the cutter 51 in a direction nearly orthogonal to the moving direction of the slider 50.

Next, by driving the cylinder 42, the movable member 41b of the clamp 41 is brought closer to the fixing member 41a so as to overlay the material plates W1, W2, W3 different in plate thickness at a specified width. Until this time, as shown in Fig. 12, the bracket 36 having the ball screw nut.37 engaged with the ball screw shaft 34 is connected to the frame 40 of the flat plate holding means 24. By driving the cylinder 39, in a state of raising the other electrode 21 in a roller form to be close to the bar-shaped electrode 22 disposed in the flat plate holding means 24, the motor 38 of the mush seam welding direction moving means 27 is driven, and the flat plate holding means 24 connected to the bracket 36 is moved along the guide rail 35, and therefore the other electrode 21 in a roller shape rolls on the joined material plates (for example, W1 and W2) out of the material plates W1, W2, W3 held by the clamps 41, 41, and the overlaid portions of material plates W1, W2 are pressed and energized between the bar-shaped electrode 22 and roll-shaped electrode 21 so as to be welded continuously. Between the bar-shaped electrode and roll-shaped electrode 22 provided in the flat plate holding means 24, meanwhile, the electrode pressure on the junctions of the material plates W1, W2, W3 by the cylinder 39, the applied current value, and welding speed by the driving of the motor 38 of the mush seam welding direction moving means 27 are controlled to optimum values depending on the plate thickness of the side edges of the material plates W1, W2, W3 to be joined. That is, when the plate thickness of the side edges of the material plates W1, W2, W3 to be joined is relatively thick, by such controlling, the electrode pressure and/or applied current value are set higher than when the thickness is relatively small, or the welding speed may be set lower. The mutually joined material plates W1, W2, W3 are held by the clamps 41, 41 so that the center of pressing P by the bar-shaped electrode 22 and roll-shaped electrode 21 may be positioned nearly in the middle of the overlaid width of the side edges.

By preliminarily chamfering the thicker material plates W1, W3 out of the material plates W1, W2, W3, a fused portion is formed near the boundary of the material plates W1 and W2, or W3 and W2, so that the material plates W1 and W2, or W3 and W2 can be mutually joined at a specified welding speed, and moreover since they are squeezed between the electrodes 22 and 21, junctions of the material plates W1 and W2, or W3 and W2 different in plate thickness can be formed smoothly.

When manufacturing the catalyst container 1 mentioned above, by chamfering the side edges of relatively thick material plates W1, W3, as shown in Fig. 19 (c) , they are joined by mush seam welding to the relatively thin material plate W2, and the plate member W0 is formed as the hollow material. At least one side edge Wa of the plate member W0 to be joined later by bending is held opposite the cutter 51 and chamfered by moving along the guide rail 48 while driving the cutter 51 by the motor 49. When joining the material plates W1, W2, W3, as shown in Fig. 12, in order not to impede movement of the flat plate holding means 24 with respect to the roll-shaped electrode 21, the bent plate holding means 26 is moved to the bend forming means 25 side as described later, but at this time, to avoid interference of the roll 28 of the bend forming means 25 and bar-shaped electrode 23 of the bent plate holding means 26 at this time, the roll 28 of the bend forming means 25 is detached in this embodiment.

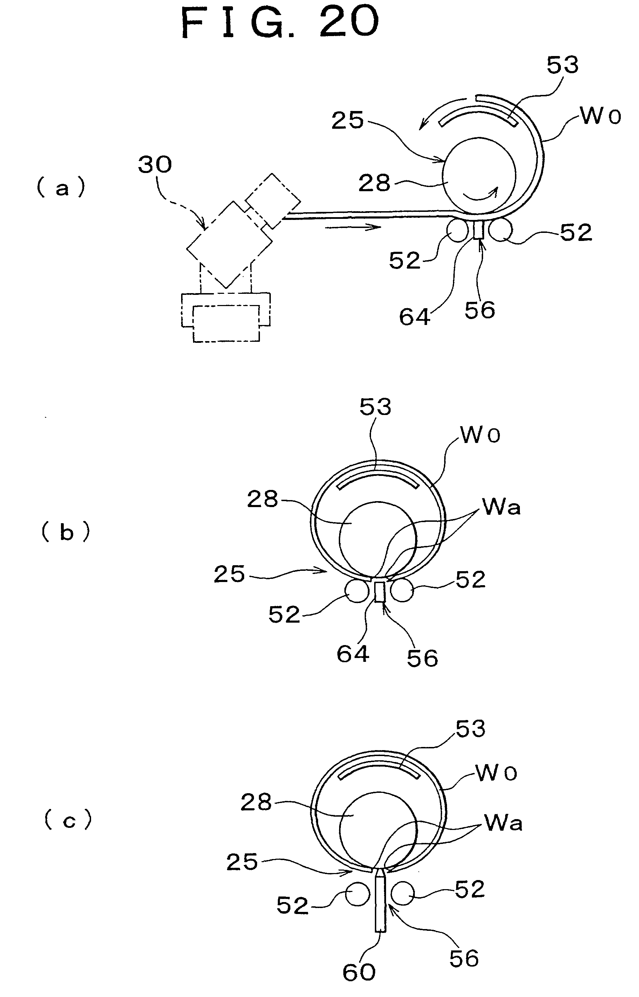

Next, an embodiment of the bend forming means 25 in the forming apparatus of a hollow material of the invention will be explained mainly by referring to Fig. 20. The bend forming means 25 comprises a roll 28 disposed at the inside position of the plate member W0 to be bent, a pair of auxiliary rolls 52, 52 disposed at a predetermined interval from the roll 28, a guide plate 53 for guiding and supporting the plate member W0 bent between the roll 28 and auxiliary rolls 52, a transmission mechanism 55 for transmitting the driving force of a motor 54 to the roll 28, and opening position detecting means 56 for positioning the side edges to be joined by detecting the opening position between the mutually opposing side edges Wa, Wa of the bent plate member W0.

The roll 28 is disposed so as to extend in the axial direction of the hollow material W to be formed, and the end at the opposite side of the bent plate holding means 26 is detachably supported on a rotary shaft (not shown) of a support bracket 57 provided on the base 33. The free end of the roll 28 is provided with a bearing 58 detachably engaged and supported to the free end support mechanism 29 (described later).

Both ends of the auxiliary rolls 52, 52 are rotatably supported so that the interval may be adjusted with respect to the roll 28 and/or each other depending on the size of the diameter of the hollow material W to be manufactured by manipulating a handle 59 (see Fig. 12 to Fig. 15). The auxiliary rolls 52 are elevatably supported by cylinders or the like, not shown, so as to be spaced from the roll 28 when transferring the rolled and bent plate member W0 to the bent plate holding means 26 by elevating a positioning member 60 of the opening position detecting means 56 described below.

The guide plate 53 is bent in the peripheral direction depending on the diameter of the hollow material W to be manufactured, and one end thereof is supported by the support bracket 57.

The transmission mechanism 55 in this embodiment is composed by mounting pulleys 61, 62 on a rotary shaft supporting the roll 28 and a rotary shaft of the motor 54, and applying a belt 63 between the both pulleys 61, 62.

The opening position detecting means 56 is provided with a sensor 64 including a proximity switch disposed between the auxiliary rolls 52, 52, and a positioning member 60 provided elevatably as shown in Figs. 20(a) to 20(c). The sensor 64, as shown in Fig. 20(b), detects when the side edges Wa, Wa of the plate member W0 finished in rolling and bending when being fed between the roll 28 and auxiliary rolls 52 are positioned between the auxiliary rolls 52, 52, and outputs a signal for stopping the motor 54 which is the rotating drive source of the roll 28. Then, as shown in Fig. 20(c), the auxiliary rolls 52, 52 are lowered, and when the positioning member 60 is raised to be inserted between the opposing side edges Wa, Wa of the rolled and bent plate member W0, the opposing side edges Wa, Wa of the rolled and bent plate member W0 are positioned by the bent plate holding means 26 so as to join by mush seam welding.

As indicated by chain double-dashed line in Fig. 20(a), meanwhile, aside from the one for chamfering the material plate W2, one more chamfering means 30 may be provided in the bend forming means 25 for chamfering at least one of the opposing side edges Wa, Wa by rolling and bending the joined plate member W0 of material plates W1, W2, W3.

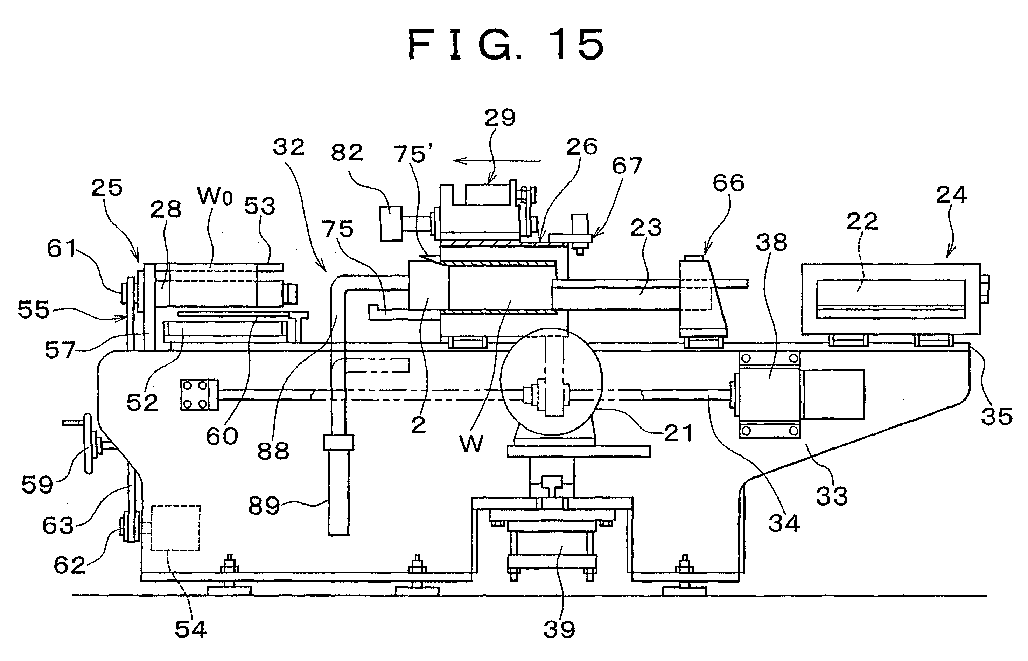

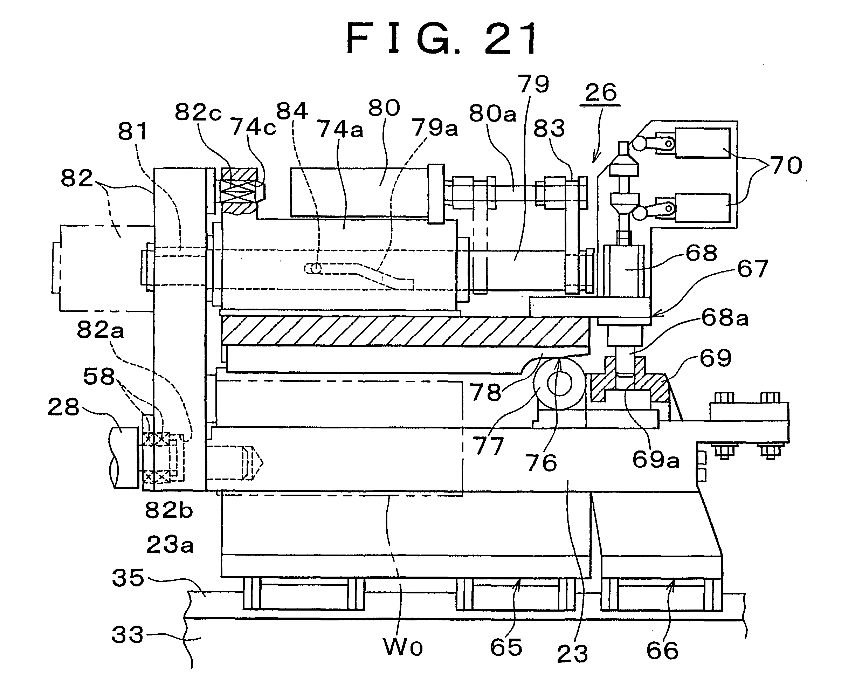

Next, an embodiment of the bent plate holding means 26 in the forming apparatus of the hollow material of the invention will be explained by referring mainly to Fig. 21 to Fig. 24. The bent plate holding means 26 is comprised of a bent plate clamp portion 65, an electrode holding portion 66 for holding a bar-shaped electrode 23 having a specified curvature at the side contacting with the side edge Wa to be joined with the rolled and bent plate member W0, and an engaging portion 67 for engaging so as to cut off the bent plate clamp portion 65 and electrode holding portion 66 (see Fig. 15).

The engaging portion 67 for engaging so as to cut off the bent plate clamp portion 65 and electrode holding portion 66 includes, in the case of the embodiment shown in Fig. 21, an actuator 68 having a cylinder for extending and contracting a working rod 68a in the vertical direction in the bent plate clamp portion 65, a receiving member 69 having an engaging hole 69a to be engaged with the working rod 68a of the actuator 68 provided in the electrode holding portion 66, and detecting means 70 comprising a limit switch or the like for detecting whether the working rod 68a of the actuator 68 is engaged or disengaged in the engaging hole 69a of the receiving member 69.

The bent plate clamp portion 65 comprises a pair of clamp members 71, 71 for gripping the rolled and bent plate member W0, an actuator 72 such as cylinder for driving to open or close the clamp members 71, and a guide 73 for guiding the opening and closing action of the clamp members 71, and a frame 74 thereof is detachably provided with the bracket 36 of the mush seam welding direction moving means 27. On the other hand, the electrode holding portion 66 holds one end of the opposite side of the bend forming means 25 of the bar-shaped electrode 23 disposed to extend in the axial direction of the hollow material W. The bent plate clamp portion 65 comprises the roll 28 of the bend forming means 25, and the free end support mechanism 29 for supporting by detachably engaging with the free end of the bar-shaped electrode 23 of the electrode holding portion 66, and one of the clamp members 71 is provided with the junction side overlaying means 31 for laying the mutually opposing axial sides (side edges Wa) of the rolled and bent plate member W0 so as to join by mush seam welding. At the side end of the bend forming means 25 of the both clamp members 71, 71, a guide 75 (see Fig. 15) of inserting means 32 described later can be detachably provided.

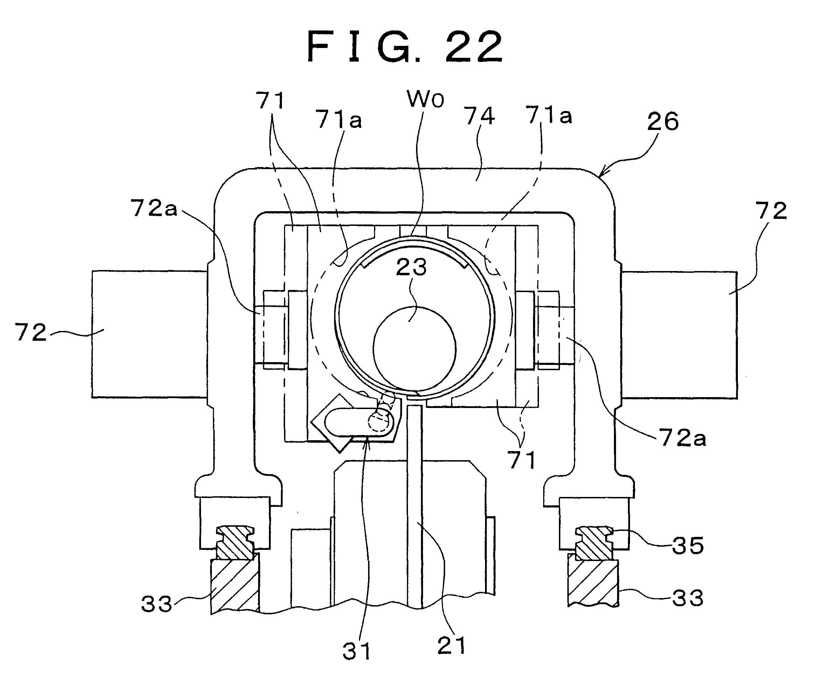

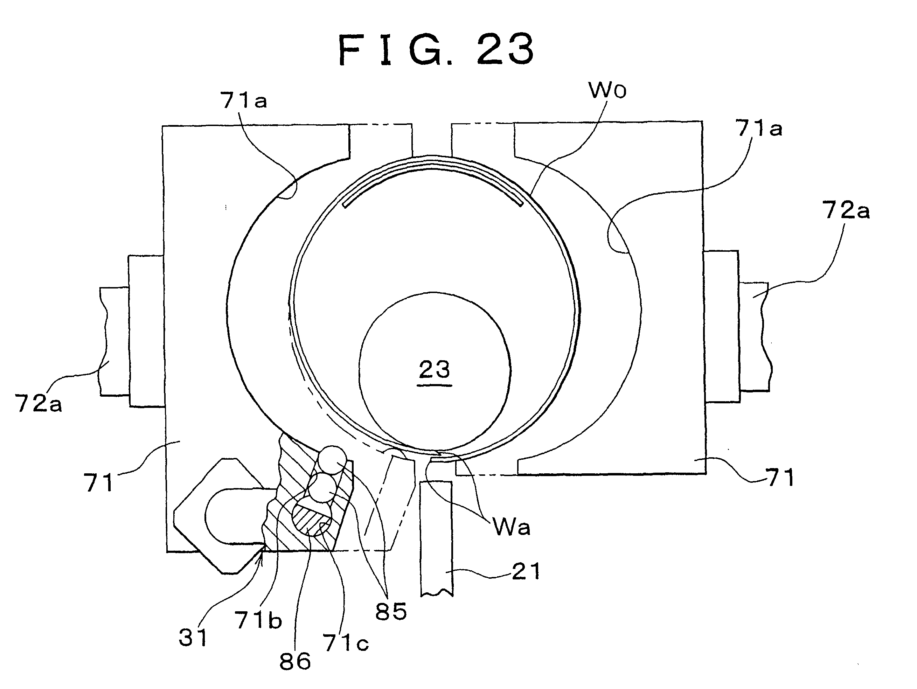

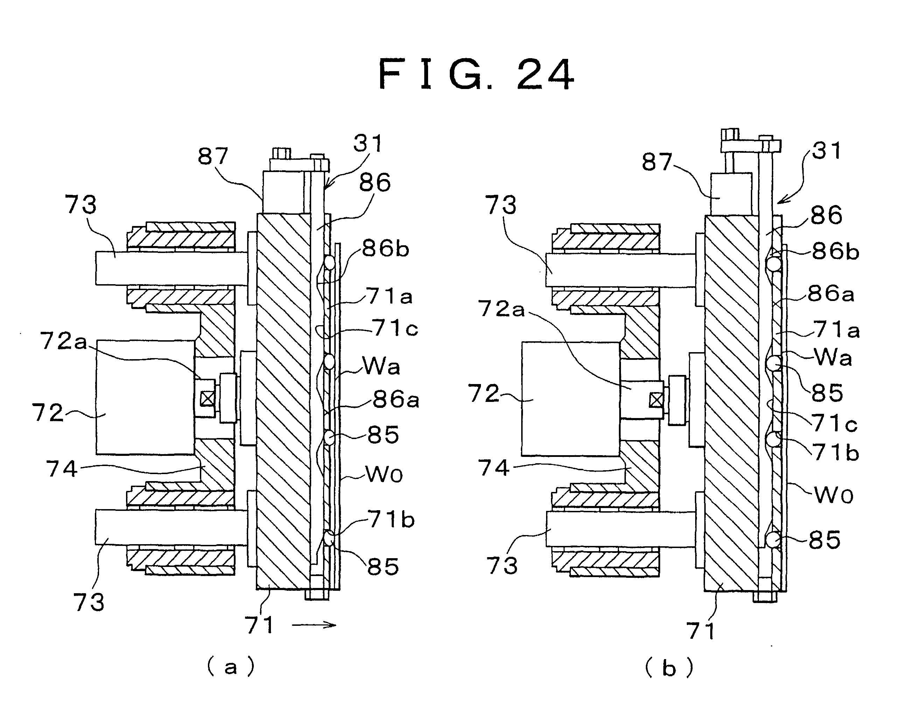

As shown in Fig. 22 and Fig. 23, the clamp member 71 is split in half depending on the diameter of the hollow material W to be manufactured, and is connected to a piston rod 72a of the cylinder 72. The holding face 71a of the clamp member 71 forms a part of a circle when the piston rod 72a of the cylinder 72 is at a forward limit position in order to hold the plate member W0. As shown in Fig. 22, the clamp member 71 forms a gap so as not to interfere with the roller-shaped electrode 21 in a state of holding the plate member W0. As shown in Fig. 24, the cylinder 72 has its piston rod 72a connected substantially in the middle in the axial direction of the clamp member 71, and the guide 73 is connected in the vicinity of the both ends in the axial direction of each clamp member 71. Further, as shown in Fig. 21, the bent plate holding means 26 has an elevating mechanism 76 for keeping the plate member W0 transferred from the bend forming means 25 in proper contact with the bar-shaped electrode 23 held by the electrode holding portion 66. This elevating mechanism 76 is composed of a roller 77 provided on the top of the electrode holding portion 66 and a roller receiving member 78 provided beneath the frame 74 of the bent material clamp portion 65 in the case of the embodiment shown in Fig. 21. As described later, more specifically, the bent material clamp portion 65 separates from the electrode holding portion 66, and receives the plate member W0 from the bend forming means 25, and when it is engaged with the electrode holding portion 66 again, the roller receiving member 78 rides on the roller 77 so that the junction side (side edge Wa) of the held plate member W0 is brought closer to the bar-shaped electrode 23 of the electrode holding portion 66.

The free end support mechanism 29 comprises, as shown in Fig. 21, a rotary shaft 79 rotating about the shaft by moving in the axial direction of the hollow material W to be manufactured, an actuator 80 having a cylinder for driving in the axial direction, which is connected to one end of the rotary shaft 79, and an arm 82 coupled so as not to rotate relatively by means of a key 81 provided at the other end of the rotary shaft 79. One end of a coupling member 83 is connected to the leading end of a piston rod 80a of a cylinder 80, and one end of the rotary shaft 79 is connected so as to be relatively rotatable to the other end of the coupling member 83. On the top of the frame 74 of the bent material clamp portion 65, a cylindrical portion 74a for slidably carrying the rotary shaft 79 is formed. In this embodiment, a groove 79a is formed on the outer peripheral of the middle of the rotary shaft 79. The groove 79a is spirally formed to turn about 90 degrees in the peripheral direction in a range of a predetermined length in the axial direction, and the bend forming means 25 side (left side in Fig. 21). from this spiral portion is formed in a straight line parallel to the axial direction. In the cylindrical portion 74a, a pin 84 to be engaged with the groove 79a is provided. At the bend forming means side at the leading end of the arm 82, a fitting portion 82a for supporting the bearing 58 provided at the free end of the roll 28 is formed, and at the side of the electrode holding portion 66, there is provided an engaging member 82b to be engaged with an engaging hole 23a formed at the leading end face of the free end of the electrode 23 having one end held by the electrode holding portion 66. At the opposite end side of the engaging member 82b of the arm 82, an engaging member 82c of a rectangular section is provided, and above the bend forming means 25 side above the cylindrical portion 74a, a positioning hole 74c corresponding to the engaging member 82c is formed.

In this embodiment, as shown in Fig. 21, by extending and driving the piston rod 80a of the cylinder 80, when the rotary shaft 79 is moved in the cylindrical portion 74a to the right in Fig. 21 through a coupling member 83, the rotary shaft 79 returns by rotating 90 degrees about the shaft, and the leading end of the arm 82 falls and rotates about the rotary shaft 79, and the engaging member 82c is engaged with the positioning hole 74c close to the frame 74, and the arm 82 is positioned at the support position.

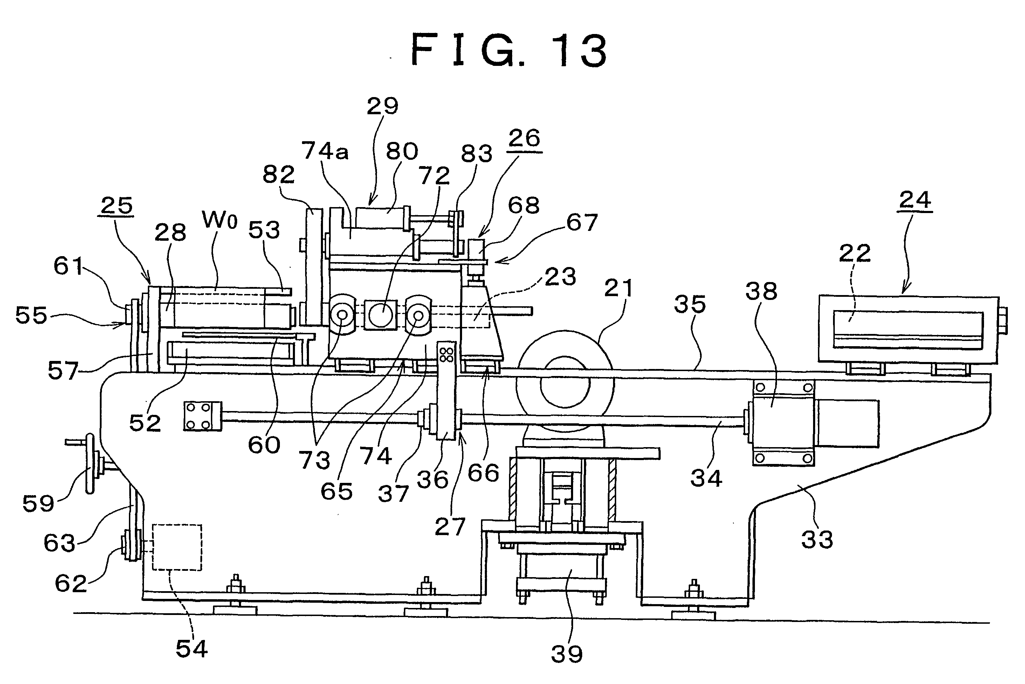

When rolling and bending the plate member W0, as shown in Fig. 13, the bent plate holding means 26 is brought closer to the bend forming means 25 by driving of the mush seam welding direction moving means 27, and as partly shown in Fig. 21, the bearing 58 of the roll 28 is fitted with the fitting portion 82a of the arm 82 positioned at the support position so that the free end of the roll 28 is supported.

When the side edge of the rolled and bent plate member W0 is subjected to mush seam welding, the working rod 68a of the cylinder 68 of the engaging portion 67 is disengaged from the engaging hole 69a, and can be separated from the electrode holding portion 66, and only the bent plate clamp portion 65 is moved close to the bend forming means 25 by driving of the mush seam welding direction moving means 27, and the plate member W0 in a rolled, bent and positioned state is received, and the bent plate clamp portion 65 is brought again closer to the electrode holding portion 66 by driving of the mush seam welding direction moving means 27 to be engaged with the engaging portion 67, and the arm 82 is positioned at the support position so that the engaging member 82a is engaged with the engaging hole 23a of the electrode 23, as shown in Fig. 21, thereby supporting the free end of the electrode 23.

On the other hand, as shown in Fig. 12 or Fig. 15, when not supporting the roll 28 and the free end of the electrode 23, as indicated by chain line in Fig. 21, the piston rod 80a of the cylinder 80 is driven back, and the rotary shaft 79 is moved in the cylindrical portion 74a to the left in Fig. 21 through the coupling member 83. As a result, the arm 82 is spaced apart from the frame 74, and the engaging member 82c is drawn out from the positioning hole 74c, and the rotary shaft 79 rotates 90 degrees about its shaft so that the leading end of the arm 82 jumps up to the retreat position.

The junction side overlaying means 31 in the embodiment shown in Fig. 23 and Fig. 24 comprises a plurality of radial holes 71b positioned near the side edge Wa to be joined of the plate member W0 held in the rolled, bent and positioned state of one of the clamp members 71, axial holes 71c communicating with the radial holes 71b, pressing members 85 engaged and held slidably in the radial holes 71b, a cam shaft 86 having a maximum diameter portion 86a for projecting the pressing member 85 from the holding face 71a of the clamp member 71 by moving in the axial direction and being inserted in the axial hole 71c and a minimum diameter portion 86b to be moved back, and an actuator 87 comprising a cylinder or the like for driving the cam shaft 86 in the axial direction. In the embodiment shown in Fig. 23 and Fig. 24, the pressing member 85 is formed spherically, and in Fig. 23, a plurality of spherical pressing members 85 are disposed in the axial holes 71b, but the invention is not limited to these examples, and these members may be formed to project and retreat properly in the holding face 71a by sliding in the axial holes 71b.

In the junction side overlaying means 31 having such configuration, in the embodiment shown in Fig. 24, when holding the rolled and bent plate member W0, by driving to retreat the working rod 87a of the actuator 87, the pressing member 85 projects from the holding face 71a of one clamp member 71 by the maximum diameter portion 86a of the cam shaft 86, and one side edge (junction side) Wa of the rolled and bent plate member W0 is pressed inside in the radial direction from the other wide edge Wa (a), thereby avoiding collision of the end faces of both side edges Wa, Wa. Upon completion of holding of the rolled and bent plate member W0, by driving to extend the working rod 87a of the actuator 87, the pressing member 85 settles into the minimum diameter portion 86b of the cam shaft 86, and retreats from the holding face 71a of one clamp member 71 (b). As a result, the rolled and bent plate member W0 springs back so that one side edge Wa may be positioned inside in the radial direction from the other side edge Wa, and is overlaid at a specified width.

Next, using the bend forming means 25 and bent plate holding means 26 having such a configuration, the operation for forming the hollow material W from the plate member W0 will be explained.

When forming the hollow material W from the plate member W0, first as shown in Fig. 13, by driving the motor 38 of the mush seam welding direction moving means 27, the flat plate holding means 24 connected to the bracket 36 is moved to the right in the drawing along the guide rail 35, and the bracket 36 having the ball screw nut 37 engaged with the ball screw shaft 34 is detached from the frame 40 of the flat plate holding means 24, and is attached to the frame 74 of the bent plate holding means 26. One end of the roll 28 is attached to a rotary shaft, not shown, of the bend forming means 25. Extending and driving the piston rod 80a of the cylinder 80 of the free end support mechanism 29, the arm 82 connected to the rotary shaft 79 is rotated to the support position. Driving the motor 38 of the mush seam welding direction moving means 27, the bent plate holding means 26 is moved closer to the bend forming means 25, and the bearing 58 provided at the free end of the roll 28 is fitted and supported in the fitting portion 82a at the leading end of the arm 82. At this time, as shown in Fig. 15, the bent plate clamp portion 65 of the bent plate holding means 26 may be separated from the electrode holding portion 66, and only the bent plate lamp 65 of the bent plate holding means 26 may be moved closer to the bend forming means 25. By manipulating the handle 59, the position of the auxiliary rolls 52 is adjusted depending on the diameter of the hollow material W to be formed or the plate thickness of the plate member W0.

In this state, by rotating and driving the roll 28 by the motor 54 through the transmission mechanism 55, as shown in Fig. 20(a), the plate member W0 is sent in between the roll 28 and auxiliary rolls 52. As shown in Fig. 20(b), the plate member W0 is rolled and bent at a specified curvature between the roll 28 and auxiliary rolls 52, and the feed direction leading end edge (side edge) Wa is guided by the guide plate 53, and is sent in again between the roll 28 and auxiliary rolls 52, while the feed direction rear end Wa passes through the sensor 64 of the opening position detecting means 56. When detecting passing of the feed direction rear end Wa of the plate member W0, and the motor 54 as the rotating drive source of the roll 28 is stopped by a stop signal output from the sensor 64. Consequently, as shown in Fig. 20(c), when the auxiliary rolls 52 are lowered, the positioning member 60 is raised and inserted between the opposing side edges Wa of the rolled and bent plate member W0, and the feed direction leading end and rear end of the rolled and bent plate member W0, that is, the side edges Wa in the axial direction to be joined are positioned.

Driving the motor 38 of the mush seam welding direction moving means 27, the bent plate holding means 26 is spaced from the bend forming means 25, and the bearing 58 provided at the free end of the roll 28 is released from the leading end fitting portion 82a of the arm 82, and by the retreat driving of the cylinder 80, the rotary shaft 79 is moved back so that the arm 82 may rotate by 90 degrees to move to the retreat position. The working rod 68a is released from the engaging hole 69a by the actuator 68 of the engaging portion 67, and the bent plate clamp portion 65 of the bent plate holding means 26 and the electrode holding portion 66 are separated, and only the bent plate clamp portion 65 of the bent plate holding means 26 is moved closer to the bend forming means 25. Release of the working rod 68a from the engaging hole 69a is detected by the detecting means 70. In succession, while keeping both clamp members 71 open, the motor 38 of the mush seam welding direction moving means 27 is driven, and only the bent plate clamp portion 65 of the bent plate holding means 26 is moved closer to the position where the clamp members 71 are adjacent to the rolled and bent plate member W0 of the bend forming means 25. Since being separated from the bent plate clamp portion 65, the electrode holding portion 66 does not move closer to the bend forming means 25 so that interference of the roll 28 and the bar-shaped electrode 23 can be avoided.

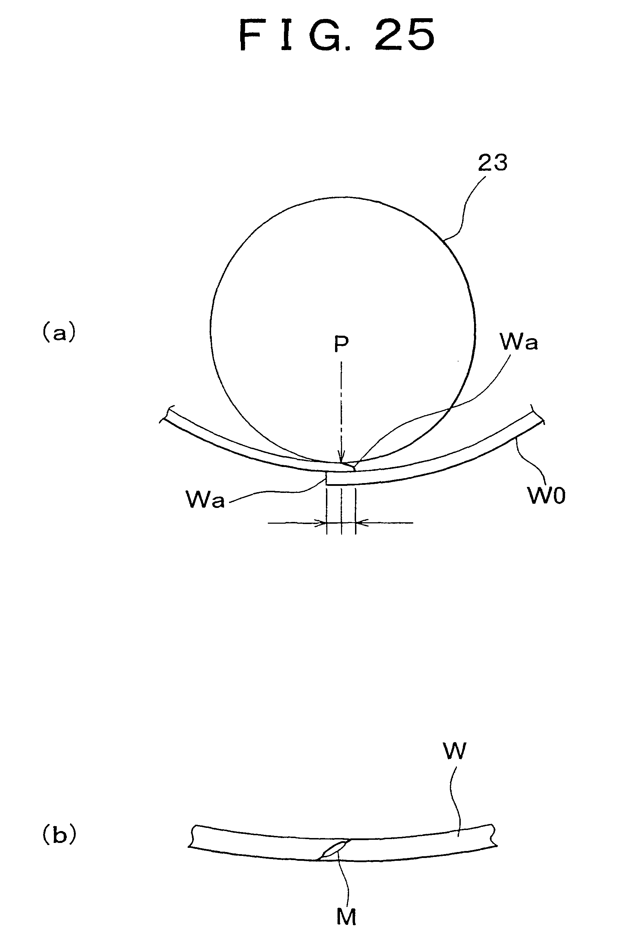

The clamp members 71 are driven so as to be closed by driving the cylinder 72. At this time, as mentioned above, by driving to retreat the working rod 87a of the actuator 87 of the junction side overlaying means 31, and projecting the pressing member 85 from the holding face 71a of one clamp member 71, one of the side edges (junction sides) Wa of the plate member W0 rolled and bent, and positioned by the positioning member 60 is securely pressed to the inside in the radial direction than the other side edge Wa so that collision of the ends of both side edges Wa can be avoided. Upon completion of holding of the rolled and bent plate member W0, by driving to extend the working rod 87a of the actuator 87, when the pressing members 85 are retreated from the holding faces 71a of the clamp members 71, since the side edges Wa in the axial direction are held by the clamp members 71 after being rolled and bent, and positioned by the positioning member 60, as shown in Fig. 25(a), the center of pressing P by the bar-shaped electrode 23 and roller-shaped electrode 21 is securely positioned substantially at the center of the overlaid width of the side edges Wa of the plate member W0.

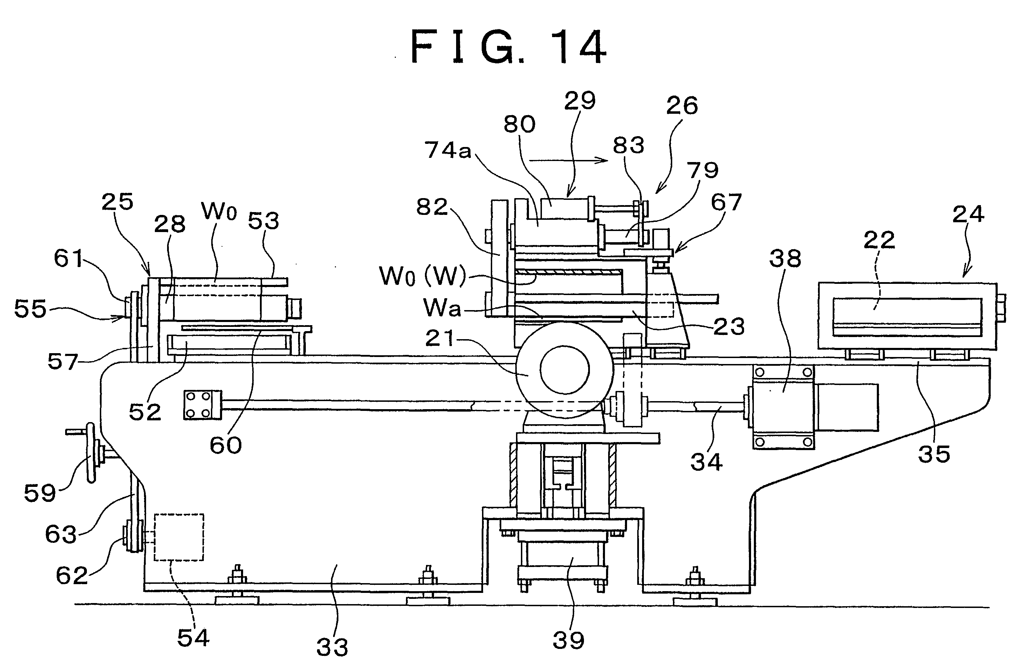

When the clamp members 71 hold the rolled and bent plate member W0, the motor 38 of the mush seam welding direction moving means 27 is driven, and the bent plate clamp portion 65 is separated from the bend forming means 25, and is combined with the electrode holding portion 66 as shown in Fig. 21, and the cylinder 68 of the engaging portion 67 is driven, and the working rod 68a is engaged with the engaging hole 69a of the engaging member 69 of the electrode holding portion 66. When the bent plate clamp member 71 is combined with the electrode holding portion 66, the roller receiving member 78 of the bent plate clamp portion 65 rides on the roller 77 of the electrode holding portion 66, and approaches the bar-shaped electrode 23 of the electrode holding portion 66 so that the junction ends (side edges) Wa of the held plate member W0 may be joined by mush seam welding. Later, by driving to extend the cylinder 80 of the free end support mechanism 29, the arm 82 is positioned at the support position, and the engaging member 82c at the leading end of the arm 82 is engaged and supported in the engaging hole 23a formed at the leading end face at the free end of the bar-shaped electrode 23. Next, as shown in Fig. 14, in the state in which the cylinder 39 is driven and the roller-shaped electrode 21 is raised to be closer to the bar-shaped electrode 23, by driving the motor 38 of the mush seam welding direction moving means 27, the bent plate holding means 26 is moved along the guide rail 35, and the roller-shaped electrode 21 rolls on the plate member W0 overlaid in the state of the side edge Wa at the junction end contacting with the bar-shaped electrode 23 so that the edges are joined continuously by mush seam welding while being pressurized and energized.

Between the bar-shaped electrode 23 and roller-shaped electrode 21 disposed in the electrode holding portion 66 of the bent plate holding means 26, the electrode pressing force by the cylinder to the plate member, the current value to be energized, and welding speed by driving of motor 38 of the mush seam welding direction moving means can be appropriately controlled depending on the plate thickness of the side edges Wa of the plate member W0 to be joined, just as in the above case of forming the plate member W0 by joining material plates W1, W2, W3.

When joining by mush seam welding, the side edges Wa of the plate member W0 are pressed between the bar-shaped electrode 23 and roller-shaped electrode 21, and are moved to escape in the opening direction mutually. However, the escape of the side edges Wa is limited by the holding faces 71a forming a circle of the both clamp members 71, being pressed to the holding faces 71a so that the roundness of the formed hollow material W to be formed is enhanced. Moreover, since the preliminarily chamfered side edges are joined by mush seam welding, as shown in Fig. 25(b), the end faces of the side edges will not project into the inner or outer side of the hollow material W, and since the fused portion M is formed widely so as to incline, the side edges Wa of the plate member W0 are firmly joined to each other, and the hollow material W is obtained.

Next, inserting means 32 for inserting an insert into the hollow material W formed by the forming apparatus of a hollow material of the invention will be explained mainly by referring to Fig. 15. In this embodiment, the insert to be inserted into the hollow material W is a catalyst carrier 2 wound around with a mat 20. It must be noted, however, that the inserting means 32 is omitted in Fig. 12 to Fig. 14.

The inserting means 32 comprises a guide 75 for supporting to guide the catalyst carrier 2, which is an insert to be detachably fitted to the end faces of the clamp members 71, into the hollow material W, a pressing member 88 disposed to advance on the base 33 and retreat in the base 33, and axial direction moving means (described later) for moving the clamp members 71 having the guide 75 attached and the pressing member 88 relatively in the axial direction.

In the embodiment shown in Fig. 15, the guide 75 is shaped like an arm (only one side is shown in Fig. 15) provided at the side ends of the both clamp members 71 opposing the pressing member 88, and the mutual interval is set so as to support the catalyst carrier 2 wound around the mat 20 and avoid interference with the pressing member 88. The guide 75 has an inclined taper 75' to push the mat 20 wound around the catalyst carrier 2 into the hollow material W so as to be larger than the diameter of the formed hollow material W.

The pressing member 88 is formed in an L-shape, and its vertical section is connected to an elevation driving actuator 89 comprising a cylinder or the like. The elevation driving actuator 89 lowers the pressing member 88 beneath the guide rail 35 of the base 33 so as not to interfere with the bent plate holding means 26 or flat plate holding means 24 moving on the base 33 by the mush seam welding direction moving means, and raises to advance onto the base 33 so as to be positioned coaxially with the catalyst carrier 2 supported by the guide 75 when inserting the catalyst carrier 2 into the formed hollow material W.

The axial direction moving means, in this embodiment, moves the catalyst carrier 2 supported by the guide 75 and the hollow material W held by the clamp members 71 in the axial direction with respect to the pressing member 88 raised on the base 33, and as mentioned above, the mush seam welding direction moving means 27 configured so as to move the bent plate holding means 26 in the axial direction functions as the axial direction moving means.

In the inserting means 32 thus configured, when inserting the catalyst carrier 2 into the formed hollow material W, by clearing the engaging portion 67 of the bent plate holding means 26 so that the bent plate clamp portion 65 may be separated from the electrode holding portion 66, the motor 38 of the mush seam welding direction moving means 27 is driven, and the bent plate clamp portion 65 is moved to the right in Fig. 15 along the guide rail 35. The guide 75 is attached to the end face of the bent plate holding means 26 opposing the pressing member 88 of the clamp member 71, and the pressing member 88 is moved to advance on the base 33 by the elevation driving actuator 89. The catalysts carrier 2 with a predetermined volume of mat 20 being wound around is put on the guide 75, and the motor 38 of the mush seam welding direction moving means 27 is driven, and the bent plate holding means 26 is moved to the left in Fig. 15 so as to be closer to the pressing member 88 along the guide rail 35. As the pressing member 88 presses the catalyst carrier 2 on the guide 75, the mat covering the catalyst carrier 2 is compressed by the taper 75' of the guide 75 so as to be larger than the diameter of the formed hollow material W, and is securely inserted into the hollow material W together with the catalyst carrier 2. The hollow material W now containing the catalyst carrier 2 with wound mat 20 is drawn and formed at both ends by a spinning process, and a catalyst container 1 integrally forming the cone 1c and the junction 1b in a shape suited for positioning of catalyst carrier 2 is composed, and thus a catalytic converter is completed.

In the forming apparatus of a hollow material of the invention, the roller-shaped electrode 21 can be used commonly for forming a plate member W partially different in thickness or material by joining material plates W1, W2, W3 different in plate thickness or material, and joining the mutually overlaid side edges Wa of the rolled and bent plate member W0, and the bar-shaped electrodes 22, 23 are moved together with the material plates W1, W2, W3, or side edges Wa of the plate member W0 with respect to the roller-shaped electrode 21, and therefore the apparatus is reduced in size and lowered in cost. Moreover, since the bar-shaped electrode 23 is used for joining of mutually overlaid side edges Wa of the rolled and bent plate member W0, even if manufacturing a hollow material W of a small diameter, the desired hollow material W can be integrally manufactured easily and reliably. Further, since the side edges (junction sides) Wa of the rolled and bent plate member W0 are joined by mush seam welding in a state held by holding faces 71a forming a circle of clamp members 71, a hollow material W of high roundness can be manufactured. A chamfered material plate W2 or a plate member W0 is joined by mush seam welding, and the junction in the peripheral direction (junctions of material plates W1, W2, W3) is smooth in the axial direction, and a junction in the axial direction (junction of the side edges Wa of the rolled and bent plate member W0) is smooth in the peripheral direction, and therefore no impact is applied if pressing the forming rolls during the spinning process, the appearance is excellent, the junction strength is high, and when used in the catalyst container 1, there is no gap created between the inner circumference and the mat 20 wound around the catalyst carrier 2 inserted inside, thus allowing no exhaust gas to escape, and the plates are formed in a specified thickness after spinning.

The forming apparatus of a hollow material of the invention is not limited to the illustrated embodiments, and may be used, for example, when forming a hollow material Wa' as shown in Fig. 5.

In summary, according to the invention, individual plate members of a different plate thickness or material are joined together by mush seam welding to form a hollow material, and the rigidity is controlled in individual parts. By spinning the hollow material, a junction and a cone are formed in an optimum shape, and a hollow member is manufactured. Thus, the hollow member smooth in junction and high in welding strength is obtained in spite of thin plate material. When this hollow member is used in a catalyst container, the sealing performance is excellent without being accompanied by an increase in radiant noise or an increase in weight.

While the invention has been described with reference to preferred embodiments thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the scope of the appended claims.

## Claims

1. A catalyst container (1) having a sectional shape that is changed by a spinning process **characterized by** comprising a hollow material (W, W') formed from a plate member (W0, W0') that is partially different in plate thickness or material wherein the plate member (W0, W0') that is partially different in plate thickness or material is formed by joining individual material plates (W1, W2, W3, W4, W5) that are different in plate thickness or material by mush seam welding, and the hollow material (W, W') is formed by bending the plate member (W0, W0') and joining the plate member (W0, W0') in the axial direction by mush seam welding.

2. The catalyst container as set forth in claim 1,
**characterized in that**
the plate thickness of a material plate (W2) used in a center (b) of the catalyst container (1) is thinner than the plate thickness of material plates (W1, W3) used at both ends (a, c) of the catalyst container (1).

3. The catalyst container as set forth in claim 1,
**characterized in that**
the plate thickness of a material plate (W5) used in a part of the end (a) of the catalyst container (1) is thicker than the plate thickness of the material plate (W2) used in the center (b) and a material plate (W4) used in another part of the end (a) of the catalyst container (1).

4. The catalyst container as set forth in claim 1,
**characterized in that**
a junction (Wa, Wa') joined by mush seam welding is chamfered.

5. The catalyst container as set forth in any one of claims 1 through 4, **characterized in that**
the sectional shape of the catalyst container (1) is changed so as to form a drawing shape suited for positioning an insert (2) to be inserted into the hollow material (W, W').

6. The catalyst container as set forth in any one of claims 1 through 5, **characterized in that**
the insert to be contained in the catalyst container (1) is a catalyst carrier (2) with a mat.

7. A manufacturing method of a catalyst container (1) comprising the steps of bending a plate member (W0, W0') that is partially different in plate thickness or material to form a hollow material (W, W'), wherein the plate member (W0, W0') that is partially different in plate thickness or material is formed by joining material plates (W1, W2, W3, W4, W5) that are a different in plate thickness or material by mush seam welding, and the hollow material (W, W') is formed by bending the plate member (W0, W0') and joining opposing sides thereof by mush seam welding and
changing the sectional shape of the hollow material (W, W') by a spinning process.

8. The manufacturing method of a catalyst container as set forth in claim 7, **characterized in that**
a junction (Wa, Wa') joined by mush seam welding is chamfered preliminarily.

9. The manufacturing method of catalyst container as set forth in any one of claim 7 or 8, **characterized in that**
the hollow material (W, W') is drawn by a spinning process, and a sectional shape thereof is changed so as to form a shape suited for positioning an insert (2) to be inserted into the hollow material (W, W').

10. A forming apparatus for forming a hollow material (W, W') for a catalyst container by disposing individual material plates (W1, W2, W3, W4, W5) that are different in plate thickness or material between electrodes, joining the material plates (W1, W2, W3, W4, W5) mutually by mush seam welding to form a plate member (W0, W0') that is partially different in plate thickness or material, bending the plate member (W0, W0'), disposing mutually opposing axial sides of the plate member (W0, W0') between electrodes (21, 23), and joining the mutually opposing axial sides of the plate member (W0, W0') together by mush seam welding,
**characterized by** comprising:
flat plate holding means (24) for holding individual material plates (W1, W2, W3, W4, W5) that are different in plate thickness or material so as to join the material plates (W1, W2, W3, W4, W5) by mush seam welding;
bend forming means (25) for bending the joined plate member (W0, W0');
bent plate holding means (26) for holding the mutually opposing axial sides of the bent plate member (W0, W0') so as to join the bent plate member (W0, W0') by mush seam welding;
a first electrode (22), being one electrode for mush seam welding provided in the flat plate holding means (24);
a second electrode (23), being one electrode for mush seam welding provided in the bent plate holding means (26);
a third electrode (21), being another common electrode for mush seam welding in collaboration with both the first and second electrodes (22, 23), respectively; and
mush seam welding direction moving means (27) for moving the flat plate holding means (24) holding the plate member (W0, W0') and the bent plate holding means (26) relatively close to and away from the other electrode (21) in the mush seam welding direction.

11. The forming apparatus as set forth in claim 10,
**characterized in that**
the bend forming means (25) comprises a roll (28) positioned inside of the plate member (W0, W0') to be bent, extending in the axial direction of the hollow material (W, W'), and supported rotatably at one end thereof,
the second electrode (23) for mush seam welding provided in the bent plate holding means (26) is formed in the shape of a bar with one end fixed and supported, and
a free end support mechanism (29) is further provided, which is detachably engaged with at least either free end of the roll (28) of the bend forming means (25) or the bar-shaped second electrode (23) of the bent plate holding means (26).

12. The forming apparatus as set forth in claim 10 or 11,
**characterized in that**
chamfering means (30) is provided for chamfering a junction (Wa, Wa') to be joined by mush seam welding.

13. The forming apparatus as set forth in any one of claims 10 through 12, **characterized in that**
the bent plate holding means (26) includes junction side overlaying means (31) for overlaying mutually opposing axial sides of the bent plate member (W0, W0') so as to join the bent plate member (W0, W0') by mush seam welding.

14. The forming apparatus as set forth in any one of claims 10 through 13, **characterized in that**
inserting means (32) is provided for inserting an insert (2) into the inside of the formed hollow material (W, W').

15. A fluid distribution system, being a system in which a fluid is distributed inside, including a catalyst container (1) according to any one of claims 1 through 6.

## Patentansprüche

1. Ein Katalysatorbehälter (1) mit einer Querschnittsform, die durch einen schnellen Rotationsvorgang verändert wird, der **dadurch gekennzeichnet ist, dass** er einen Hohlkörper (W, W') umfasst, der aus einem Blechelement (WO, WO') geformt ist, welches in Blechdicke oder Werkstoff teilweise unterschiedlich ist, wobei das Blechelement (WO, WO'), welches in Blechdicke oder Werkstoff teilweise unterschiedlich ist, geformt wird, indem einzelne Werkstoffbleche (W1, W2, W3, W4, W5), die in Blechdicke oder Werkstoff unterschiedlich sind, durch Rollennahtschweißen zusammengefügt werden, und der Hohlkörper (W, W') durch Biegen des Blechelements (WO, WO') geformt und durch Rollennahtschweißen des Blechelements (WO, WO') in axialer Richtung zusammengefügt wird.

2. Der Katalysatorbehälter gemäß Anspruch 1,
**dadurch gekennzeichnet, dass**
die Blechdicke eines Werkstoffblechs (W2), das in einem Zentrum (b) des Katalysatorbehälters (1) verwendet wird, dünner als die Blechdicke der Werkstoffbleche (W1, W3) ist, die an beiden Enden (a, c) des Katalysatorbehälters (1) verwendet werden.

3. Der Katalysatorbehälter gemäß Anspruch 1,
**dadurch gekennzeichnet, dass**
die Blechdicke eines Werkstoffblechs (W5), das in einem Teil des Endes (a) des Katalysatorbehälters (1) verwendet wird, dicker als die Blechdicke des Werkstoffblechs (W2), das im Zentrum (b) verwendet wird, und eines Werkstoffblechs (W4) ist, das in einem anderen Teil des Endes (a) des Katalysatorbehälters (1) verwendet wird.

4. Der Katalysatorbehälter gemäß Anspruch 1,
**dadurch gekennzeichnet, dass**
eine Verbindung (Wa, Wa'), die durch Rollennahtschweißen zusammengefügt ist, eine Fase aufweist.

5. Der Katalysatorbehälter gemäß irgendeinem der Ansprüche 1 bis 4,
**dadurch gekennzeichnet, dass**
die Querschnittsform des Katalysatorbehälters (1) so verändert wird, dass eine gezogene Form geformt wird, die für das Positionieren eines Einsatzes (2) geeignet ist, der in den Hohlkörper (W, W') eingesetzt werden kann.

6. Der Katalysatorbehälter gemäß irgendeinem der Ansprüche 1 bis 5,
**dadurch gekennzeichnet, dass**
der Einsatz, der in dem Katalysatorbehälter (1) enthalten sein soll, ein Katalysatorträger (2) mit einer Matte ist.

7. Ein Verfahren zur Herstellung eines Katalysatorbehälters (1), welches die Schritte Biegen eines Blechelements (WO, WO'), welches in Blechdicke oder Werkstoff teilweise unterschiedlich ist, um einen Hohlkörper (W, W1) zu formen, wobei das Blechelement (WO, WO'), welches in Blechdicke oder Werkstoff teilweise unterschiedlich ist, durch Zusammenfügen von Werkstoffblechen (W1, W2, W3, W4, W5), die in Blechdicke oder Werkstoff unterschiedlich sind, durch Rollennahtschweißen geformt wird, und der Hohlkörper (W, W') durch Biegen des Blechelements (WO, WO') geformt und durch Rollennahtschweißen der gegenüberliegenden Seiten davon zusammengefügt wird und
Verändern der Querschnittsform des Hohlkörpers (W, W') durch einen schnellen Rotationsvorgang umfasst.

8. Das Verfahren zur Herstellung eines Katalysatorbehälters gemäß Anspruch 7,
**dadurch gekennzeichnet, dass**
eine Verbindung (Wa, Wa'), die durch Rollennahtschweißen zusammengefügt wird, vorher angefast wird.

9. Das Verfahren zur Herstellung eines Katalysatorbehälters gemäß irgendeinem der Ansprüche 7 oder 8,
**dadurch gekennzeichnet, dass**
der Hohlkörper (W, W') durch einen schnellen Rotationsvorgang gezogen wird und seine Querschnittsform so verändert wird, dass sie in eine Form gebracht wird, die für das Positionieren eines Einsatzes (2) geeignet ist, der in den Hohlkörper (W, W') eingesetzt werden kann.

10. Eine Vorrichtung zum Formen eines Hohlkörpers (W, W) für einen Katalysatorbehälter durch Auslegen einzelner Werkstoffbleche (W1, W2, W3, W4, W5), die in Blechdicke oder Werkstoff unterschiedlich sind, zwischen Elektroden, Zusammenfügen der Werkstoffbleche (W1, W2, W3, W4, W5) untereinander durch Rollennahtschweißen, um ein Blechelement (WO, WO') zu formen, welches in Blechdicke oder Werkstoff teilweise unterschiedlich ist, Biegen des Blechelements (WO, WO'), Auslegen einander gegenüber liegender axialer Seiten des Blechelements (WO, WO') zwischen Elektroden (21, 23) und Zusammenfügen der einander gegenüber liegenden axialen Seiten des Blechelements (WO, WO') durch Rollennahtschweißen,
**dadurch gekennzeichnet, dass es Folgendes umfasst:**
eine Flachblechhaltevorrichtung (24) zum Halten einzelner Werkstoffbleche (W1, W2, W3, W4, W5), die in Blechdicke oder Material unterschiedlich sind, so dass die Werkstoffbleche (W1, W2, W3, W4, W5) durch Rollennahtschweißen zusammengefügt werden;
eine Formbiegevorrichtung (25) zum Biegen des zusammengefügten Blechelements (WO, WO');
eine Biegeblechhaltevorrichtung (26) zum Halten der einander gegenüber liegenden axialen Seiten des gebogenen Blechelements (WO, WO'), so dass das gebogene Blechelement (WO, WO') durch Rollennahtschweißen zusammengefügt werden kann;
eine erste Elektrode (22), die eine Elektrode zum Rollennahtschweißen ist, die in der Flachblechhaltevorrichtung (24) vorgesehen ist;
eine zweite Elektrode (23), die eine Elektrode zum Rollennahtschweißen ist, die in der Biegeblechhaltevorrichtung (26) vorgesehen ist;
eine dritte Elektrode (21), die eine weitere übliche Elektrode zum Rollennahtschweißen in Zusammenarbeit mit der ersten beziehungsweise der zweiten Elektrode (22, 23) ist; und
eine Rollennahtschweiß-Richtungsbewegungsvorrichtung (27) zum relativen Hin- und wieder Wegbewegen der Flachblechhaltevorrichtung (24), welche das Blechelement (WO, WO') hält, und der Biegeblechhaltevorrichtung (26) dicht an die andere Elektrode (21) in Rollennahtschweiß-Richtung.

11. Die Vorrichtung zum Formen gemäß Anspruch 10,
**dadurch gekennzeichnet, dass**
die Formbiegevorrichtung (25) eine Rolle (28) umfasst, die im Inneren des Blechelements (WO, WO') positioniert ist, das zu biegen ist, sich in axialer Richtung des Hohlkörpers (W, W') erstreckt und an einem Ende davon drehbar gelagert ist,
die zweite Elektrode (23) zum Rollennahtschweißen, die in der Biegeblechhaltevorrichtung (26) vorgesehen ist, in Form eines Stabs geformt ist, dessen eines Ende fest und gelagert ist, und
darüber hinaus ein Freiende-Haltemechanismus (29) vorgesehen ist, der abnehmbar mit mindestens einem freien Ende der Rolle (28) der Formbiegevorrichtung (25) oder der stabförmigen zweiten Elektrode (23) der Biegeblechhaltevorrichtung (26) verbunden ist.

12. Die Vorrichtung zum Formen gemäß Anspruch 10 oder 11,
**dadurch gekennzeichnet, dass**
eine Anfasvorrichtung (30) zum Anfasen einer Verbindung (Wa, Wa'), die durch Rollennahtschweißen zusammenzufügen ist, vorgesehen ist.

13. Die Vorrichtung zum Formen gemäß irgendeinem der Ansprüche 10 bis 12,
**dadurch gekennzeichnet, dass**
die Biegeblechhaltevorrichtung (26) eine Verbindungsseiten-Überlappungsvorrichtung (31) zum Überlappen einander gegenüber liegender axialer Seiten des gebogenen Blechelements (WO, WO') enthält, so dass das gebogene Blechelement (WO, WO') durch Rollennahtschweißen zusammengefügt wird.

14. Die Vorrichtung zum Formen gemäß irgendeinem der Ansprüche 10 bis 13,
**dadurch gekennzeichnet, dass**
eine Einsetzvorrichtung (32) zum Einsetzen eines Einsatzes (2) in die Innenseite des geformten Hohlkörpers (W, W') vorgesehen ist.

15. Ein Flüssigkeitsverteilungssystem, welches ein System ist, in dessen Inneren ein Fluid verteilt wird, einschließlich eines Katalysatorbehälters (1) gemäß einem der Ansprüche 1 bis 6.

## Revendications

1. Conteneur de catalyseur (1) ayant une forme profilée qui est changée par un procédé de tournage **caractérisé par** le fait de comprendre un matériau creux (W, W') formé à partir d'une plaque de matériau (W0, W0') qui est partiellement différente en épaisseur de plaque ou en matériau dans lequel l'élément de plaque (W0, W0'), qui est partiellement différent en épaisseur de plaque ou en matériau, est formé en joignant des plaques de matériau individuelles (W1, W2, W3, W4, W5), qui sont différentes en épaisseur de plaque ou en matériau, par un soudage à la molette avec une bouillie et le matériau creux (W, W') est formé en pliant l'élément de plaque (W0, W0') et en joignant l'élément de plaque (W0, W0') dans la direction axiale par un soudage à la molette avec une bouillie.

2. Conteneur de catalyseur comme exposé dans la revendication 1, **caractérisé en ce que**
l'épaisseur de plaque d'une plaque de matériau (W2) utilisée au centre (b) du conteneur de catalyseur (1) est plus fine que l'épaisseur de plaque des plaques de matériau (W1, W3) utilisées aux deux extrémités (a, c) du conteneur de catalyseur (1).

3. Conteneur de catalyseur comme exposé dans la revendication 1, **caractérisé en ce que**
l'épaisseur de plaque d'une plaque de matériau (W5) utilisée à une partie de l'extrémité (a) du conteneur de catalyseur (1) est plus épaisse que l'épaisseur de plaque de la plaque de matériau (W2) utilisée dans une autre partie de l'extrémité (a) du conteneur de catalyseur (1).

4. Conteneur de catalyseur comme exposé dans la revendication 1, **caractérisé en ce que**
une jonction (Wa, Wa') jointe par un soudage à la molette avec une bouillie est chanfreinée.

5. Conteneur de catalyseur comme exposé dans l'une quelconque des revendications 1 à 4, **caractérisé en ce que**
la forme profilée du conteneur de catalyseur (1) est changée de sorte à former une forme d'étirage appropriée pour positionner une pièce rapportée (2) qui doit être insérée dans le matériau creux (W, W').

6. Conteneur de catalyseur comme exposé dans l'une quelconque des revendications 1 à 5, **caractérisé en ce que**
la pièce rapportée qui doit être contenue dans le conteneur de catalyseur (1) est un support de catalyseur (2) avec un matelas de fibres.

7. Procédé de fabrication d'un conteneur de catalyseur (1) comprenant les étapes consistant à plier un élément de plaque (W0, W0'), qui est partiellement différent en épaisseur de plaque ou en matériau, pour former un matériau creux (W, W'), dans lequel l'élément de plaque (W0, W0'), qui est partiellement différent en épaisseur de plaque ou en matériau, est formé en joignant les plaques de matériau (W1, W2, W3, W4, W5), qui sont partiellement différentes en épaisseur de plaque ou en matériau, par un soudage à la molette avec une bouillie et le matériau creux (W, W') est formé en pliant l'élément de plaque (W0, W0') et en joignant ses bords mutuellement opposés par un soudage à la molette avec une bouillie et
en changeant la forme profilée du matériau creux (W, W') par un procédé de tournage.

8. Procédé de fabrication d'un conteneur de catalyseur comme exposé dans la revendication 7, **caractérisé en ce que**
une jonction (Wa, Wa') jointe par un soudage à la molette avec une bouillie est chanfreinée préliminairement.

9. Procédé de fabrication d'un conteneur de catalyseur comme exposé dans l'une quelconque de la revendication 7 ou de la revendication 8, **caractérisé en ce que**
le matériau creux (W, W') est étiré par un procédé de tournage et sa forme profilée est changée de sorte à former une forme appropriée pour positionner une pièce rapportée (2) qui doit être insérée dans le matériau creux (W, W').

10. Appareil de formage pour former un matériau creux (W, W') pour un conteneur de catalyseur en disposant des plaques de matériau individuelles (W1, W2, W3, W4, W5) qui sont différentes en épaisseur de plaque ou en matériau, entre des électrodes, en joignant les plaques de matériau (W1, W2, W3, W4, W5) mutuellement par un soudage à la molette avec une bouillie pour former un élément de plaque (W0, W0') qui est partiellement différent en épaisseur de plaque ou en matériau, en pliant l'élément de plaque (W0, W0'), en disposant les bords axiaux mutuellement opposés de l'élément de plaque (W0, W0') entre les électrodes (21, 23) et en joignant ensemble les bords axiaux mutuellement opposés de l'élément de plaque (W0, W0') par un soudage à la molette avec une bouillie, **caractérisé par** le fait de comprendre :
un moyen de maintien de plaque à plat (24) pour maintenir les plaques de matériau individuelles (W1, W2, W3, W4, W5), qui sont différentes en épaisseur de plaque ou en matériau, de sorte à joindre les plaques de matériau (W1, W2, W3, W4, W5) par un soudage à la molette avec une bouillie ;
un moyen de formage de coude (25) pour plier l'élément de plaque joint (W0, W0') ;
un moyen de maintien de plaque pliée (26) pour maintenir les bords axiaux mutuellement opposés de l'élément de plaque plié (W0, W0') de sorte à joindre l'élément de plaque plié (W0, W0') par un soudage à la molette avec une bouillie ;
une première électrode (22), qui est une électrode pour un soudage à la molette avec une bouillie, prévue dans le moyen de maintien de plaque à plat (24) ;
une seconde électrode (23), qui est une électrode pour un soudage à la molette avec une bouillie, prévue dans le moyen de maintien de plaque pliée (26) ;
une troisième électrode (21), qui est une autre électrode commune pour un soudage à la molette avec une bouillie en collaboration avec à la fois les première et seconde électrodes (22, 23), respectivement ; et
un moyen de déplacement de direction de soudage à la molette avec une bouillie (27) pour déplacer le moyen de maintien de plaque à plat (24) maintenant l'élément de plaque (W0, W0') et le moyen de maintien de plaque pliée relativement proche de et loin de l'autre électrode (21) dans la direction de soudage à la molette avec une bouillie.

11. Appareil de formage comme exposé dans la revendication 10, **caractérisé en ce que**
le moyen de formage de coude (25) comprend un rouleau (28) positionné à l'intérieur de l'élément de plaque (W0, W0') qui doit être plié, s'étendant dans la direction axiale du matériau creux (W, W') et supporté de manière rotative à une extrémité de celui-là,
la seconde électrode (23) pour un soudage à la molette avec une bouillie, prévue dans le moyen de maintien de plaque pliée (26) est formée sous la forme d'une barre avec une extrémité fixée et supportée, et
un mécanisme de support d'extrémité libre (29) est, en outre, prévu qui est de manière détachable mis en prise avec au moins l'une ou l'autre extrémité libre du rouleau (28) du moyen de formage de coude (25) ou de la seconde électrode en forme de barre (23) du moyen de maintien de plaque pliée (26).

12. Appareil de formage comme exposé dans la revendication 10 ou 11 , **caractérisé en ce que**
un moyen de chanfreinage (30) est prévu pour chanfreiner une jonction (Wa, Wa') qui doit être jointe par un soudage à la molette avec une bouillie.

13. Appareil de formage comme exposé dans l'une quelconque des revendications 10 à 12, **caractérisé en ce que**
le moyen de maintien de plaque pliée (26) inclut un moyen de recouvrement de bord de jonction (31) pour recouvrir les bords axiaux mutuellement opposés de l'élément de plaque plié (W0, W0') de sorte à joindre l'élément de plaque plié (W0, W0') par un soudage à la molette avec une bouillie.

14. Appareil de formage comme exposé dans l'une quelconque des revendications 10 à 13, **caractérisé en ce que**
un moyen d'insertion (32) est prévu pour insérer une pièce rapportée (2) à l'intérieur du matériau creux formé (W, W').

15. Système de distribution de fluide, qui est un système dans lequel un fluide est distribué à l'intérieur, incluant un conteneur de catalyseur (1) selon l'une quelconque des revendications 1 à 6.
